(19) Europäisches Patentamt / European Patent Office / Office européen des brevets

(11) **EP 4 686 079 A1**

(12) **EUROPEAN PATENT APPLICATION**
published in accordance with Art. 153(4) EPC

(43) Date of publication:
**28.01.2026 Bulletin 2026/05**

(51) International Patent Classification (IPC):
***H02P 21/14*** *(2016.01)*

(21) Application number: **24795903.4**

(52) Cooperative Patent Classification (CPC):
**H02P 21/14**

(22) Date of filing: **16.04.2024**

(86) International application number:
**PCT/CN2024/087991**

(87) International publication number:
**WO 2024/222522 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 CN 202310483873**
**28.04.2023 CN 202310484955**

(71) Applicant: **Nanjing Chervon Industry Co., Ltd.**
**Nanjing, Jiangsu 211106 (CN)**

(72) Inventors:
• **FENG, Jifeng**
**Nanjing, Jiangsu 211106 (CN)**
• **GUO, Zengbing**
**Nanjing, Jiangsu 211106 (CN)**
• **LI, Jiawei**
**Nanjing, Jiangsu 211106 (CN)**

(74) Representative: **Sun, Yiming**
**HUASUN Patent- und Rechtsanwälte**
**Friedrichstraße 33**
**80801 München (DE)**

(54) **ELECTRIC TOOL AND CONTROL METHOD THEREFOR**

(57) Provided are a power tool and a control method therefor. The power tool includes an electric motor; an output member driven by the electric motor to implement the function of the power tool; a power supply device for supplying power to the electric motor; a driver circuit electrically connected to the electric motor; and a controller for controlling the electric motor to operate to drive the output member to operate and acquiring the electric motor parameters of the electric motor in real time. The flux of the electric motor is estimated based on the acquired electric motor parameters, and the parameter related to the real-time temperature of the electric motor is estimated according to the flux so that the operation of the power tool is controlled according to the acquired parameter. Therefore, the flux of the electric motor is estimated by acquiring the electric motor parameters during the operation of the electric motor, and the parameter related to the electric motor temperature is estimated according to the flux. In this manner, the electric motor temperature can be accurately acquired without providing a temperature sensor, thereby ensuring a simple structure, which is conducive to saving production costs and improving the overall stability of the device.

FIG. 1

## Description

This application claims priority to Chinese Patent Application No. 202310483873.1 filed with the China National Intellectual Property Administration (CNIPA) on Apr. 27, 2023 and Chinese Patent Application No. 202310484955.8 filed with the CNIPA on Apr. 28, 2023, the disclosures of which are incorporated herein by reference in their entireties.

## TECHNICAL FIELD

The present application relates to the technical field of power tools and, in particular, to an electric motor in a power tool and a control method therefor.

## BACKGROUND

The electric motor for providing a driving force is the main functional component of the power tool. When the electric motor operates under a heavy load, the temperature of the electric motor may rise to the demagnetization temperature. Before the temperature of the electric motor reaches the demagnetization temperature, the electric motor protection program executes protective actions or issues a reminder to enhance the heat dissipation for the electric motor, thereby achieving over-temperature protection.

In the related art, a pre-embedded temperature sensor for measuring the electric motor temperature is used to achieve the over-temperature protection for the electric motor. The preceding method has the problems below. The pre-embedded sensor needs to be equipped with a sensor body, a wiring harness, and corresponding connectors, increasing the device costs and reducing the overall reliability of the device.

This part provides background information related to the present application, and the background information is not necessarily the existing art.

## SUMMARY

An object of the present application is to solve or at least alleviate part or all of the preceding problems. Therefore, an object of the present application is to provide a power tool and a control method therefor so that the electric motor temperature can be accurately acquired without providing a temperature sensor. In this manner, the problems of increased costs and low reliability caused by the temperature sensor for measuring the electric motor temperature provided in the existing power tool can be solved, which is conducive to saving production costs.

To achieve the preceding object, the present application adopts the technical solutions below. The present application provides a power tool. The power tool includes an electric motor including a stator and a rotor; an output member driven by the electric motor to implement the function of the power tool; a power supply device for supplying power to at least the electric motor; a driver circuit electrically connected to the electric motor; and a controller electrically connected to at least the driver circuit to control the operation of the electric motor. The controller is configured to control the electric motor to operate to drive the output member to operate and to acquire the electric motor parameters of the electric motor in real time. The flux of the electric motor is estimated based on the acquired electric motor parameters, and the parameter related to the real-time temperature of the electric motor is estimated according to the flux so that the operation of the power tool is controlled according to the acquired parameter.

In some examples, the controller is configured to control the operation of the electric motor in a field-oriented control (FOC) mode and estimate the flux of the electric motor based on the acquired electric motor parameters and a preset voltage equation.

In some examples, the controller is configured to acquire the initial temperature and an initial flux value corresponding to the initial temperature, calculate a temperature rise value of the rotor according to the flux and the initial flux value, and calculate the real-time rotor temperature of the rotor according to the initial temperature and the temperature rise value.

In some examples, the controller is configured to acquire operating conditions of the electric motor and estimate the parameter related to the real-time temperature of the electric motor according to a target estimation program matching the operating conditions.

In some examples, the controller is configured to estimate the flux of the electric motor based on the target estimation program and the electric motor parameters.

In some examples, the power tool includes a string trimmer, the output member is a string trimmer rope, operating conditions of the string trimmer rope include at least low-speed winding and high-speed grass trimming, and the operating conditions of the electric motor are in one-to-one correspondence with the operating conditions of the string trimmer rope.

In some examples, the controller is configured to control the electric motor to stop or decelerate when the estimated temperature of the electric motor exceeds a preset value.

In some examples, the power tool further includes an indication unit for indicating the current temperature of the electric motor.

In some examples, the indicator unit is configured to issue a warning signal according to the current temperature.

In some examples, the power tool includes at least one of a handheld power tool, a table power tool, a manned mower, a smart mower, an all-terrain vehicle, and an electric motorcycle.

In some examples, the output member includes at least one of a string trimmer head, a saw blade, a saw chain, a mowing element, and traveling wheels.

In some examples, the power tool further includes a housing, and the power supply device includes a battery pack detachably mounted to the housing.

In some examples, the electric motor parameters include the voltage and/or the current on the winding of the electric motor.

In some examples, the power tool further includes a current detection module for collecting the current of the electric motor, and the current includes the bus current or the phase current of the electric motor.

In some examples, the electric motor is a brushless motor and the power tool is not provided with a temperature sensor.

A control method for a power tool is provided. The power tool is provided with an electric motor. The control method includes: controlling the electric motor to operate to drive an output member to operate and acquiring the electric motor parameters of the electric motor in real time; estimating the flux of the electric motor according to the electric motor parameters; and estimating the parameter related to the real-time temperature of the electric motor according to the flux.

In some examples, the electric motor is controlled in an FOC mode.

A power tool includes an electric motor including a stator and a rotor; an output member driven by the electric motor to implement the function of the power tool; a power supply device for supplying power to at least the electric motor; a driver circuit electrically connected to the electric motor; and a controller electrically connected to at least the driver circuit to control the operation of the electric motor. The controller is configured to acquire operating conditions of the electric motor and estimate the parameter related to the real-time temperature of the electric motor according to a target estimation program matching the operating conditions.

In some examples, the controller is configured to estimate the flux of the electric motor based on the target estimation program and electric motor parameters.

In some examples, the power tool includes a string trimmer, the output member is a string trimmer rope, operating conditions of the string trimmer rope include at least low-speed winding and high-speed grass trimming, and the operating conditions of the electric motor are in one-to-one correspondence with the operating conditions of the string trimmer rope.

The present application has the benefits below. The electric motor parameters are acquired in real time during the operation of the electric motor, the flux of the electric motor is estimated based on the acquired electric motor parameters, and the parameter related to the real-time temperature of the electric motor is estimated according to the flux so that the operation of the power tool can be controlled according to the parameter related to the real-time temperature of the electric motor. In this manner, the problems of increased costs and low reliability caused by the temperature sensor for measuring the electric motor temperature provided in the existing power tool can be solved, the electric motor temperature can be accurately acquired without providing the temperature sensor, and the structure is simple, which is conducive to saving production costs and improving the overall stability of the device.

**BRIEF DESCRIPTION OF DRAWINGS**

FIG. 1 is a structural view of a power tool according to an example of the present application.

FIG. 2 is a circuit block diagram of a power tool according to an example of the present application.

FIG. 3 is a control block diagram of a control method for a power tool according to an example of the present application.

FIG. 4 is a flowchart of a control method for a power tool according to an example of the present application.

FIG. 5 is a flowchart of a control method for a power tool according to another example of the present application.

FIG. 6 is a schematic diagram of a curve illustrating the relationship between voltage and current of a power tool according to an example of the present application.

FIG. 7 is a flowchart of a control method for a power tool according to another example of the present application.

FIG. 8 is a structural view of a power tool according to another example of the present application.

FIG. 9 is a structural view of a power tool according to an example of the present application.

FIG. 10 is a structural view of another power tool according to an example of the present application.

FIG. 11 is a structural view of another power tool according to an example of the present application.

FIG. 12 is a schematic diagram of a circuit structure of a power tool according to an example of the present application.

FIG. 13 is a schematic diagram of a circuit structure of another power tool according to an example of the present application.

FIG. 14 is a schematic diagram of a system architecture of a power tool according to an example of the present application.

FIG. 15 is a schematic diagram of a system architecture of another power tool according to an example of the present application.

FIG. 16 is a schematic diagram of a system architecture of another power tool according to an example of the present application.

FIG. 17 is a schematic diagram of a system architecture of another power tool according to an example of the present application.

FIG. 18 is a flowchart of a method for calibrating the dead time of a power tool according to an example of the present application.

FIG. 19 is a schematic diagram of a system architecture of an electric energy transmission control module according to an example of the present application.

FIG. 20 is a schematic diagram illustrating the structure of a power conversion circuit according to an example of the present application.

FIG. 21 is a schematic diagram of a system architecture of another electric energy transmission control module according to an example of the present application.

FIG. 22 is a schematic diagram of a system architecture of another electric energy transmission control module according to an example of the present application.

FIG. 23 is a schematic diagram of a system architecture of another electric energy transmission control module according to an example of the present application.

FIG. 24 is a schematic diagram of a system architecture of another electric energy transmission control module according to an example of the present application.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

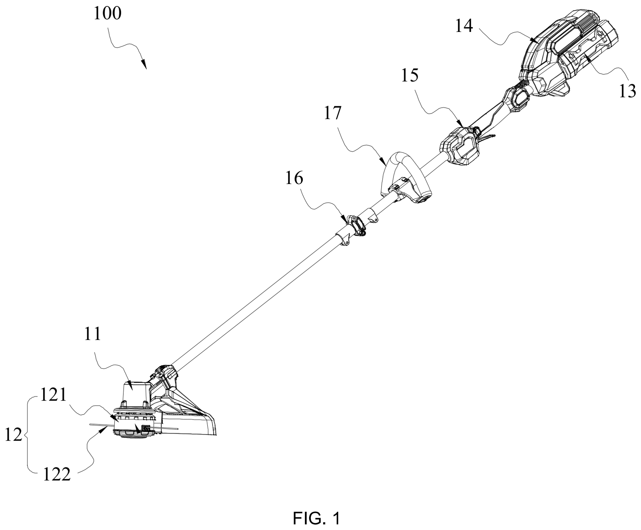

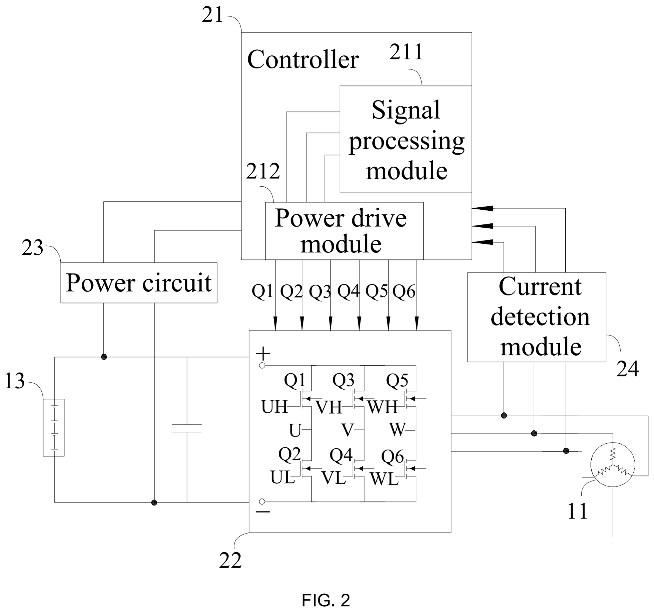

FIG. 1 is a structural view of a power tool as an example. FIG. 2 is a circuit block diagram of a power tool as an example. In the example of the present application, the power tool is not provided with a temperature sensor. Typically, the power tool may be a handheld power tool, a self-propelled power tool, a pole power tool, or a garden power tool such as a string trimmer or a hedge trimmer. The type of the power tool is not limited in the present application. As long as the power tool can adopt the essence of the technical solutions disclosed below, the power tool is within the scope of the present application.

As shown in FIGS. 1 and 2, a power tool 100 includes an electric motor 11, an output member 12, a power supply device 13, a handle 14, a circuit board (not shown), and electronic components disposed on the circuit board.

The output member 12 is driven by the electric motor 11 to implement the function of the power tool 100. For example, grass trimming, branch pruning, and the like can be implemented. The output member 12 may be connected to the electric motor 11 via a tool accessory shaft. Different power tools have different output members 12. For example, for a string trimmer, the output member 12 includes a string trimmer head and a string trimmer rope. For a hedge trimmer, the output member 12 is a hedge clipper.

As shown in FIG. 1, the output member 12 of the string trimmer includes a string trimmer head 121 and a string trimmer rope 122. The string trimmer head 121 is used for mounting the string trimmer rope 122 to implement the grass trimming function. The string trimmer head 121 is used for trimming grass, and the string trimmer head 121 is used for driving the string trimmer rope 122 to rotate at a high speed to cut vegetation such as grass and trees. The electric motor 11 is used for driving the string trimmer head 121 to rotate about the central axis (not specifically shown in the figure) of the housing of the string trimmer head 121.

The electric motor 11 is operably connected to the output member 12 and used for outputting a driving force to drive the output member 12 to operate. Specifically, the electric motor 11 includes a rotor, a stator, and a motor shaft, and the tool accessory shaft and the motor shaft may be connected through a transmission device so that the driving force of the motor shaft can be transmitted to the tool accessory shaft. The tool accessory shaft is connected to the output member 12 so that the electric motor 11 can drive the output member 12 to operate. In this example, the electric motor 11 is a brushless motor having three phases of windings wound around a stator. The power supply device 13 is used for supplying power to the power tool. The power supply device 13 can output alternating current (AC) or direct current (DC). The power supply device 13 includes, but is not limited to, a battery pack and a photovoltaic assembly. The battery pack is detachably mounted in the housing of the power tool 100, and the photovoltaic chip is detachably mounted on the surface of the housing of the power tool 100. The handle 14 is for the user to hold, and the handle 14 may be an independent part or formed by the housing 11.

In some examples, the power tool 100 may further include an operating member 15 used for starting or stopping the electric motor 11 and disposed on the handle 14. The electric motor 11 is started when the operating member 15 is triggered, and the electric motor 11 is stopped when the operating member 15 is released.

In some examples, the power tool 100 may further include a connecting device 16 and an auxiliary handle 17. The connecting device 16 includes a detachable connecting rod so that the output member 12 is detachable and replaceable.

The operation of the power tool 100 also depends on circuit components or electronic components. In conjunction with FIG. 2, the power tool 100 further includes a controller 21, a driver circuit 22, a power circuit 23, and a current detection module 24. The controller 21, the driver circuit 22, the power circuit 23, and the current detection module 24 are electrically connected to the electric motor 11 and the power supply device 13 to form an electric motor driving system.

The current detection module 24 is connected to the electric motor 11 and used for collecting the real-time current of the electric motor 11, and the real-time current may be the bus current or the phase current of the electric motor.

The input end of the power circuit 23 is electrically connected to the power supply device 13 and used for converting the electrical energy of the power supply device 13 into the electrical energy that can be used by the electrical load in the power tool 100. The output end of the power circuit 23 is electrically connected to at least the controller 21 and used for supplying power to the controller 21.

The controller 21 is electrically connected to at least the driver circuit 22 to output a drive signal to control the operation of the electric motor 11. In some examples, the controller 21 may be a dedicated control chip (such as a microcontroller unit (MCU)). The controller 21 includes a signal processing module 211 and a power drive module 212. The signal processing module 211 is configured to process acquired sampling signals of the electric motor current and has functions such as calculation, comparison, and determination. After processing signals, the signal processing module 211 can generate a control signal and output the control signal to the power drive module 212. The power drive module 212 is connected to the signal processing module 211. The power drive module 212 can enhance driving capabilities of output signals of the power drive module 212 to drive the driver circuit 22 to work. The power drive module 212 may be an external power drive module.

The driver circuit 22 is electrically connected to the controller 21 and the electric motor 11. The driver circuit 22 can drive the operation of the electric motor 11 according to control signals outputted from the power drive module 212 in the controller 21. Specifically, the driver circuit 22 is electrically connected to the three phases of windings of the electric motor 11. Specifically, the driver circuit 22 includes a switching circuit, where the switching circuit is configured to drive the operation of the rotor of the electric motor 11 according to the control signal outputted by the controller 21.

In the present application, the driver circuit 22 has multiple driving states. In a driving state, the stator windings of the electric motor generate a magnetic field, and the controller 21 is configured to output a corresponding drive signal to the driver circuit 22 according to the rotational position of the rotor of the electric motor to make the driver circuit 22 switch the driving state. In this manner, a state of a voltage and/or a current loaded to the windings of the electric motor 11 varies, and an alternating magnetic field is generated to drive the rotor to rotate so that the electric motor can be driven. The rotor position of the electric motor 11 may be calculated by the signal processing module 211 in the controller 21 by sampling the current and/or voltage of the electric motor.

As shown in FIG. 2, the switching circuit of the driver circuit 22 includes switching elements Q1, Q2, Q3, Q4, Q5, and Q6. The switching elements Q1, Q2, Q3, Q4, Q5, and Q6 form a three-phase bridge, where Q1, Q3, and Q5 are upper bridge switches, and Q2, Q4, and Q6 are lower bridge switches. The upper bridge switch and lower bridge switch of each phase bridge circuit are connected to the same winding. The switching elements Q1 to Q6 may be field-effect transistors, insulated-gate bipolar transistors (IGBTs), or the like. The gate terminals of the switching elements are electrically connected to the power drive module 212 of the controller 21 separately. The drain or source of each switching element is electrically connected to the winding of the electric motor 11. The switching elements Q1 to Q6 receive the control signals outputted by the controller 21. For example, the switching element Q1 receives a first control signal UH, the switching element Q2 receives a second control signal UL, the switching element Q3 receives a third control signal VH, the switching element Q4 receives a fourth control signal VL, the switching element Q5 receives a fifth control signal WH, the switching element Q6 receives a sixth control signal WL, and the switching elements Q1 to Q6 change the conduction states according to the control signals outputted by the controller 21 so that the state of the voltage and/or current loaded to the windings of the electric motor 11 by the power supply device 13 can be changed, thereby driving the electric motor 11 to operate.

During the operation of the electric motor 11, the temperature of the rotor of the electric motor gradually increases, and the temperature rise of the electric motor needs to be monitored in real time. The power tool 100 is controlled to execute corresponding protective actions before the electric motor temperature reaches the demagnetization temperature.

Therefore, the present application provides a power tool so that the electric motor temperature can be estimated without mounting a temperature sensor. Specifically, the controller 21 is configured to output a control signal to the driver circuit 22, control the electric motor 11 to operate to drive the output member 12 to operate, and acquire the electric motor parameters of the electric motor 11 in real time. In the example of the present application, the electric motor parameters include, but are not limited to, the voltage and/or the current on the windings of the electric motor 11. For example, the electric motor parameters include the voltage vector amplitude $U_s$ and the current vector amplitude $I_s$.

The controller 21 is further configured to estimate the flux of the electric motor 11 based on the acquired electric motor parameters, estimate the parameter related to the real-time temperature of the electric motor 11 according to the flux, and control the operation of the power tool 100 according to the parameter related to the real-time temperature of the electric motor. Specifically, the electric motor parameters and the flux of the electric motor 11 satisfy a specific voltage equation, and the electrical motor parameters acquired in real time may be substituted into the corresponding voltage equation to calculate the flux of the electric motor 11. After the flux is obtained, the parameter related to the real-time temperature of the electric motor 11, such as the rotor temperature of the electric motor, is estimated according to the corresponding relationship between the flux and the electric motor temperature. The electric motor parameters are acquired in real time during the operation of the electric motor, the flux of the electric motor is estimated based on the acquired electric motor parameters, and the parameter related to the real-time temperature of the electric motor is estimated according to the flux. In this manner, the problems of increased costs and low reliability caused by the temperature sensor for measuring the electric motor temperature provided in the existing power tool can be solved, the electric motor temperature can be accurately acquired without providing the temperature sensor, and the structure is simple, which is conducive to saving production costs and improving the overall stability of the device.

In some examples, in conjunction with FIG. 2, the method in which the controller 21 estimates the flux of the electric motor 11 based on the acquired electric motor parameters specifically includes: controlling the operation of the electric motor 11 in an FOC mode; and in the FOC mode, substituting the acquired electric motor parameters into a preset voltage equation to estimate the flux of the electric motor 11.

The electric motor parameters acquired in real time include at least the q-axis current $i_q$ and the q-axis voltage $U_q$.

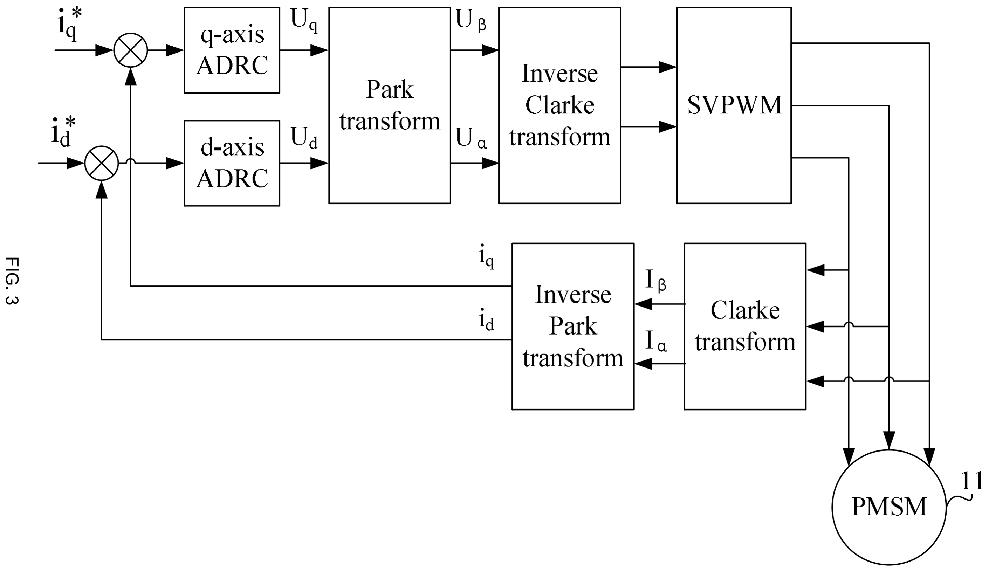

As shown in FIG. 3, the signal processing module 211 may obtain the q-axis current $i_q$ and the d-axis current $i_d$ according to the sampled current of the electric motor 11. The q-axis current $i_q$ is related to the electric motor torque, and the d-axis current $i_d$ is related to the stator magnetic field strength.

As shown in FIG. 3, FOC is provided with at least a current loop. The FOC process of the current loop is as follows: the controller 21 acquires the sampled motor current signal from the current detection module 24, and the sampled current signal may be the bus current or the phase current. After acquiring the sampled motor current signal, the controller 21 obtains the sampled motor current through calculation. Specifically, a current calculation unit obtains three-phase currents (such as $i_a$, $i_b$, and $i_c$) of the electric motor in a three-phase stationary coordinate system by calculation (where current vectors of two phases of three-phase coils may be sampled, and a current vector of the last phase may be calculated according to the Kirchhoff's current law). After the three-phase currents are calculated, two orthogonal time-varying current vectors, which are the two-phase currents $I_\alpha$ and $I_\beta$, may be obtained after the Clarke transform. The two orthogonal time-varying current vectors $I_\alpha$ and $I_\beta$ obtained above are then inputted into the controller 21 for the Park transform. After processing, two-phase DC currents may be obtained. The two-phase DC currents are the q-axis current $i_q$ and the d-axis current $i_d$, and the q-axis current $i_q$ and the d-axis current $i_d$ are perpendicular to each other.

As shown in FIG. 3, the controller 21 may perform decoupling based on the actual current of the electric motor to obtain the q-axis target current $i_q^*$ and the d-axis target current $i_d^*$. Based on the comparison result between the q-axis current $i_q$ and the q-axis target current $i_q^*$, a first error value is inputted into the controller 21. Based on the comparison result between the d-axis current $i_d$ and the d-axis target current $i_d^*$, a second error value is inputted into the controller 21. The controller 21 performs proportional-integral (PI) regulation to output the voltage vectors to act on the electric motor. The voltage vectors are the q-axis target voltage $U_q$ and the d-axis target voltage $U_d$. Furthermore, the voltage vectors obtained above are subjected to the inverse Park transform in a two-phase stationary coordinate system to obtain two-phase DC voltages $U_\alpha$ and $U_\beta$, the two-phase DC voltages $U_\alpha$ and $U_\beta$ are inputted into the controller 21 to perform inverse Clarke transform, the two-phase DC voltages $U_\alpha$ and $U_\beta$ are converted into two-phase AC voltages, and then the two-phase AC voltages are converted into three-phase AC voltages through space vector pulse-width modulation (PWM) technology. The three-phase AC voltages are target voltages applied to the electric motor 11. The controller 21 generates PWM signals according to the acquired target voltages to control the on and off states of the switching elements in the driver circuit 22 so that the electric motor 11 operates in the control mode of the controller 21.

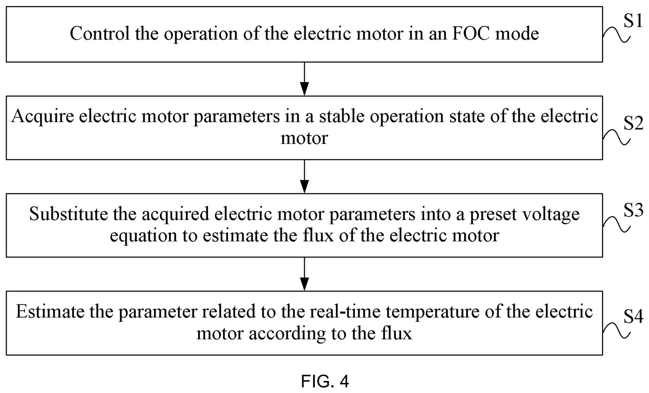

Referring to FIGS. 3 and 4, the method for the controller 21 to control the electric motor 11 includes the steps below.

In S1, the operation of the electric motor 11 is controlled in an FOC mode.

In S2, electric motor parameters in a stable operation state of the electric motor, such as the q-axis current $i_q$ and the q-axis voltage $U_q$ are acquired.

In S3, the acquired electric motor parameters are substituted into a preset voltage equation to estimate the flux of the electric motor 11.

In the present application, the control mode of the controller 21 is set to a mode in which id = 0, and the preset voltage equation may be a q-axis voltage equation in the control mode in which id = 0. In the control mode in which id = 0, the q-axis voltage equation may be expressed by formula one below.

$$U_q = R * i_q + \omega_e * \Psi_f \qquad \text{(Formula one)}$$

Uq denotes the q-axis voltage, iq denotes the q-axis current, R denotes the stator resistance of the electric motor, $\omega_e$ denotes the electrical angular velocity of the electric motor, and $\Psi_f$ denotes the flux of the electric motor.

Specifically, a first FOC signal is outputted to the electric motor 11 to control the brushless motor to operate in the control mode in which id = 0. In the control mode in which id = 0, when the electric motor is in a stable operation state, the q-axis current $i_q$ and the d-axis current $i_d$ are obtained according to the sampled current of the electric motor 11. Parameters such as the q-axis voltage $U_q$, the q-axis current $i_q$, and the electrical angular velocity $\omega_e$ of the electric motor are used as independent variables, while the stator resistance R and the real-time flux value $\Psi_f$ are used as dependent variables. The acquired independent variable parameters are substituted into the q-axis voltage equation expressed by formula one, and the stator resistance R and the real-time flux value $\Psi_f$ are calculated using methods such as recursive least squares (RLS), the Kalman filter, or the model reference adaptive system (MRAS).

In S4, the parameter related to the real-time temperature of the electric motor 11 is estimated according to the flux.

In some examples, the method in which the controller 21 estimates the parameter related to the real-time temperature of the electric motor 11 according to the flux specifically includes: acquiring the initial temperature T0 and the initial flux value $\Psi_{f0}$ corresponding to the initial temperature, calculating a temperature rise value $\Delta T$ according to the real-time flux $\Psi_f$ and the initial flux value $\Psi_{f0}$, and calculating the parameter related to the real-time temperature of the electric motor 11, such as the rotor temperature or the permanent magnet temperature, according to the initial temperature T0 and the temperature rise value $\Delta T$.

In the present application, the flux $\Psi_f$ and the temperature T satisfy the relationship shown in formula two.

$$\Psi_f = \Psi_{f0} * (1 + K * \Delta T), \ K < 0 \qquad \text{(Formula two)}$$

K denotes the temperature rise coefficient between the flux $\Psi_f$ and the temperature T, $\Delta T$ denotes the temperature rise value of the flux $\Psi_f$ at the sampling moment, and $\Psi_{f0}$ denotes the flux corresponding to the initial temperature T0.

Specifically, the initial temperature T0 may be the temperature at the moment when the electric motor starts. The initial temperature T0 and the initial flux value $\Psi_{f0}$ may be set by the operator or acquired according to the historical data stored in the controller 11. The temperature rise coefficient K may be obtained based on data calibration or curve fitting. The initial temperature T0, the initial flux value $\Psi_{f0}$, and the temperature rise coefficient K are used as known quantities. After the real-time flux $\Psi_f$ of the electric motor 11 is obtained, the preceding parameters are substituted into formula two to calculate the current temperature rise value $\Delta T$. The sum of the initial temperature T0 and the temperature rise value $\Delta T$ is determined as the real-time rotor temperature of the electric motor 11. By acquiring the electric motor parameters in the control mode in which id = 0, the flux of the electric motor is calculated in conjunction with the voltage equation, and the winding temperature of the electric motor is calculated according to the corresponding relationship between the flux and the temperature so that the temperature of the permanent magnet of the electric motor can be obtained. The algorithm is simple and the current temperature of the rotor of the electric motor can be accurately determined without the temperature sensor.

In some other examples, the method in which the controller 21 estimates the parameter related to the real-time temperature of the electric motor 11 further includes the following step: determining the real-time stator resistance R of the electric motor 11 according to the electric motor parameters, calculating the temperature rise value according to the real-time stator resistance R and the initial resistance value R0, and calculating the parameter related to the real-time temperature of the electric motor 11, such as the rotor temperature or the permanent magnet temperature, according to the initial temperature T0 and the temperature rise value.

In the present application, the stator resistance R and the temperature T satisfy the relationship shown in formula three.

$$R = R_0 * (1 + \alpha * \Delta T),\ \alpha > 0 \qquad \text{(Formula three)}$$

$\alpha$ denotes the temperature rise coefficient between the stator resistance R and the temperature T, $\Delta T$ denotes the temperature rise value of the flux $\Psi_f$ at the sampling moment, and R0 denotes the stator resistance value corresponding to the initial temperature T0.

Specifically, the initial resistance value R0 and the initial temperature T0 may be set by the operator or acquired according to the historical data stored in the controller 11. The temperature rise coefficient $\alpha$ may be obtained based on data calibration or curve fitting. The initial temperature T0, the initial flux value $\Psi_{f0}$, and the temperature rise coefficient $\alpha$ are used as known quantities. After the real-time flux $\Psi_f$ of the electric motor 11 is obtained, the preceding parameters are substituted into formula three to calculate the current temperature rise value $\Delta T$. The sum of the initial temperature T0 and the temperature rise value $\Delta T$ is determined as the real-time rotor temperature of the electric motor 11. The winding temperature of the electric motor is calculated through the corresponding relationship between the stator resistance and temperature of the electric motor, and then the temperature of the permanent magnet of the electric motor is obtained. The algorithm is simple and the current temperature of the rotor of the electric motor can be accurately determined without the temperature sensor.

In some examples, the controller 21 is configured to acquire operating conditions of the electric motor and estimate the parameter related to the real-time temperature of the electric motor according to a target estimation program matching the operating conditions.

The operating condition of the electric motor is a condition where the temperature of the electric motor rises significantly, for example, a low-speed and high-load operating condition or a high-speed operating condition.

Specifically, the target estimation program may be configured to include a voltage equation established based on a permanent-magnet synchronous motor voltage model.

For example, the permanent-magnet synchronous motor voltage model may be expressed by formula four below.

$$U_s = \omega_e \Psi_f + (R + j\omega_e L_s)I_s + U_0 \qquad \text{(Formula four)}$$

$U_0$ denotes the error voltage generated by the dead-time effect of the switching elements in the driver circuit 22, $U_s$ denotes the voltage vector amplitude, $I_s$ denotes the current vector amplitude, $\omega_e$ denotes the electrical angular velocity of the electric motor, $\Psi_f$ denotes the flux of the electric motor, and $L_s$ denotes.

It is to be noted that $U_0$ denotes a nonlinear voltage. If nonlinear compensation has been performed, $U_0$ may be ignored. In this case, the permanent-magnet synchronous motor voltage model is simplified as: $U_s = \omega_e \Psi_f + (R + j\omega_e L_s)I_s$.

In some examples, the power tool includes a string trimmer, and the output member is a string trimmer rope.

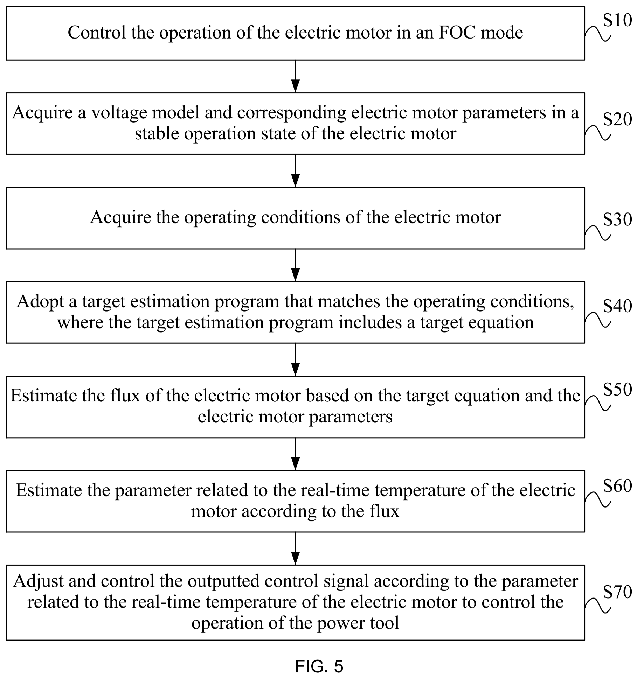

Referring to FIG. 5, the string trimmer is used as an example. The method for the controller 21 to control the electric motor 11 includes the steps below.

In S10, the operation of the electric motor 11 is controlled in an FOC mode.

In S20, a voltage model and corresponding electric motor parameters in a stable operation state of the electric motor are acquired. For example, the electric motor parameters are a voltage vector amplitude Us and a current vector amplitude Is.

In some examples, the voltage vector amplitude Us and the current vector amplitude Is may be directly calculated in a stationary coordinate system, thereby avoiding coupling with the electrical angle.

In S30, the operating conditions of the electric motor 11 are acquired.

In some examples, the operating conditions of the string trimmer rope include at least low-speed winding and high-speed grass trimming, and the operating conditions of the electric motor 11 are in one-to-one correspondence with the operating conditions of the string trimmer rope.

In S40, a target estimation program matching the operating conditions is adopted, where the target estimation program includes a target equation.

In S50, the flux of the electric motor is estimated based on the target equation and the electric motor parameters.

In some examples, the string trimmer is used as an example, and the target equation includes, but is not limited to, a first target equation in a low-speed winding condition and a second target equation in a high-speed grass trimming condition.

In conjunction with formula four, the target equation may be established based on the following permanent-magnet synchronous motor voltage model: $U_s = \omega_e \Psi_f + (R + j\omega_e L_s)I_s + U_0$. The corresponding target equation is established in conjunction with the operating condition of the electric motor 11.

(1) In the low-speed winding condition, $\omega_e L_s \ll R$. Therefore, the first target equation in the low-speed winding condition may be expressed by formula five below.

$$U_s = \omega_e \Psi_f + R * I_s + U_0 \qquad \text{(Formula five)}$$

The voltage vector amplitude Us and the current vector amplitude Is may be directly calculated in a stationary coordinate system, $\omega_e$, denotes the electrical angular velocity, and $U_0$ denotes the error voltage of the driver circuit.

In the low-speed winding condition, the flux $\Psi_f$ may be calculated according to formula five. Before the flux $\Psi_f$ is calculated, resistance identification may be performed to improve the flux identification accuracy.

Specifically, the controller 21 controls the electric motor 11 to operate in a stationary state. In a stable stationary coordinate system, the voltage vector amplitude Us and the current vector amplitude Is of the electric motor 11 satisfy formula six below.

$$U_s = R * I_s + U_0 \qquad \text{(Formula six)}$$

R denotes the stator resistance, and $U_0$ denotes the error voltage generated by the dead-time effect of the switching elements in the driver circuit 22.

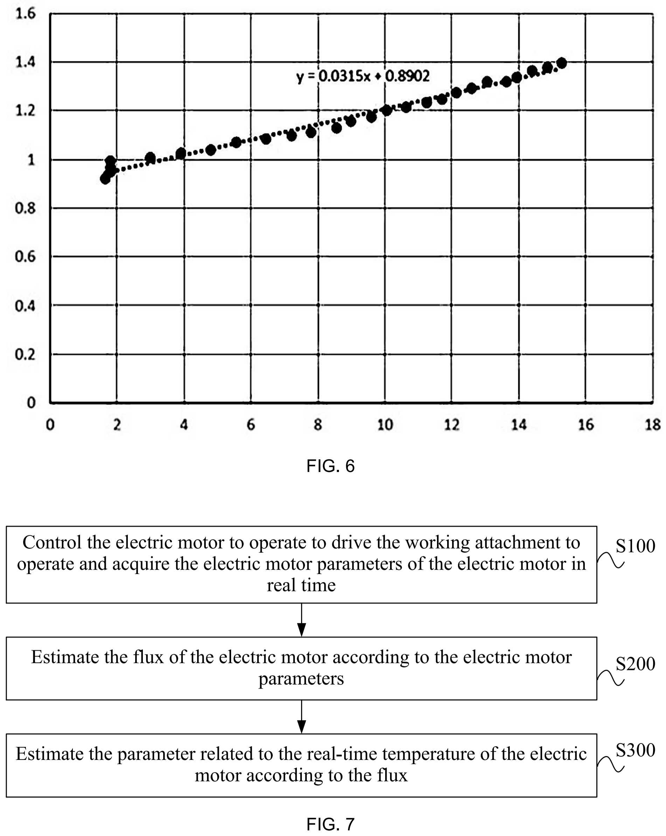

Referring to FIG. 6, the resistance identification method of the controller 21 is described below. Multiple sets of electric motor parameters, such as the voltage vector amplitude Us and the current vector amplitude Is, are acquired in a stable stationary mode. Curve fitting is performed based on the multiple sets of electric motor parameters to obtain a fitting function. The fitting function is the following linear function with one variable: y = a * x + b. The fitted parameter a is determined as the real-time stator resistance R of the brushless motor, and the fitted parameter b is used to determine the error voltage U0 of the driver circuit 11. In conjunction with formula six, the stator resistance R and the error voltage U0 are substituted into formula five to calculate the real-time flux $\Psi_f$.

(2) In the high-speed grass trimming condition, $\omega_e L_s \gg R$. Therefore, the second target equation in the high-speed grass trimming condition may be expressed by formula seven below.

$$U_s = \omega_e \Psi_f + j\omega_e L_s * I_s + U_0 \qquad \text{(Formula seven)}$$

The voltage vector amplitude Us and the current vector amplitude Is may be directly calculated in a stationary coordinate system, $\omega_e$ denotes the electrical angular velocity, and $U_0$ denotes the error voltage of the driver circuit.

In the high-speed grass trimming condition, the flux $\Psi_f$ is calculated in conjunction with formula seven.

In S60, the parameter related to the real-time temperature of the electric motor is estimated according to the flux.

In S70, the outputted control signal is adjusted and controlled according to the parameter related to the real-time temperature of the electric motor to control the operation of the power tool.

In some examples, the controller 21 is configured to control the electric motor 11 to stop or decelerate when the estimated temperature of the electric motor exceeds a preset value.

The preset value is an electric motor temperature rise limit value.

Specifically, the controller 21 may determine the temperature change of the rotor of the electric motor according to the stator resistance, determine the flux change according to the real-time flux value, and determine whether to perform over-temperature protection according to the temperature change and the flux change. The string trimmer is used as an example. In the low-speed winding condition, if any one of the temperature change and the flux change triggers the over-temperature protection threshold, the controller 21 sends a shutdown control signal to control the electric motor 11 to shut down. In the high-speed grass trimming condition, if any one of the temperature change and the flux change triggers the over-temperature protection threshold, the controller 21 sends a deceleration control signal to control the electric motor 11 to decelerate. The operating conditions of the power tool are identified and a matching over-temperature protection strategy is triggered in conjunction with the stator resistance and the flux change, which is conducive to improving the over-temperature detection accuracy, improving the over-temperature regulation effect, preventing the power tool from directly shutting down in a high-speed operation state and affecting the device operation, and improving the user experience.

In some examples, the power tool further includes an indication unit for indicating the current temperature of the electric motor 11 and/or issuing a warning signal according to the current temperature.

For example, the indication unit may be any one or a combination of the following: a display screen, a light-emitting diode (LED) flashing light, or a buzzer.

Based on the same inventive concept, the present application further provides a control method for a power tool, which is used for the preceding power tool. The power tool is provided with the electric motor, and the power tool is not provided with a temperature sensor. The electric motor temperature can be accurately acquired without the temperature sensor.

In the example of the present application, the electric motor may be controlled in an FOC mode.

Specifically, the motor may be controlled to operate in the FOC mode in which id = 0.

FIG. 7 is a flowchart of a control method for a power tool according to the present application.

As shown in FIG. 7, the control method for a power tool may specifically include the steps below.

In S100, the electric motor is controlled to operate to drive the output member to operate, and the electric motor parameters of the electric motor are acquired in real time.

In S200, the flux of the electric motor is estimated according to the electric motor parameters.

In S300, the parameter related to the real-time temperature of the electric motor is estimated according to the flux.

In some examples, the control method for a power tool includes: controlling the operation of the electric motor in an FOC mode and estimating the flux of the electric motor based on the acquired electric motor parameters and a preset voltage equation.

In some examples, the control method for a power tool includes: acquiring the initial temperature and an initial flux value corresponding to the initial temperature, calculating a temperature rise value according to the real-time flux value and the initial flux value, and calculating the real-time rotor temperature of the electric motor according to the initial temperature and the temperature rise value.

In some examples, the control method for a power tool includes: acquiring operating conditions of the electric motor and estimating the parameter related to the real-time temperature of the electric motor according to a target estimation program matching the operating conditions.

In some examples, the control method for a power tool includes: estimating the flux of the electric motor based on the target estimation program and the electric motor parameters.

In some examples, the power tool includes a string trimmer, the output member is a string trimmer rope, operating conditions of the string trimmer rope include at least low-speed winding and high-speed grass trimming, and the operating conditions of the electric motor are in one-to-one correspondence with the operating conditions of the string trimmer rope.

In some examples, the control method for a power tool includes: controlling the electric motor to stop or decelerate when the estimated temperature of the electric motor exceeds a preset value.

In some examples, the control method for a power tool includes: indicating the current temperature of the electric motor and/or issuing a warning signal according to the current temperature.

In some examples, the power tool involved in the present application includes, but is not limited to, a handheld power tool, a table power tool, a manned mower, a smart mower, an all-terrain vehicle, and an electric motorcycle. The output member includes, but is not limited to, a string trimmer head, a saw blade, a saw chain, a mowing element, and traveling wheels. The adapted output members of different power tools are different.

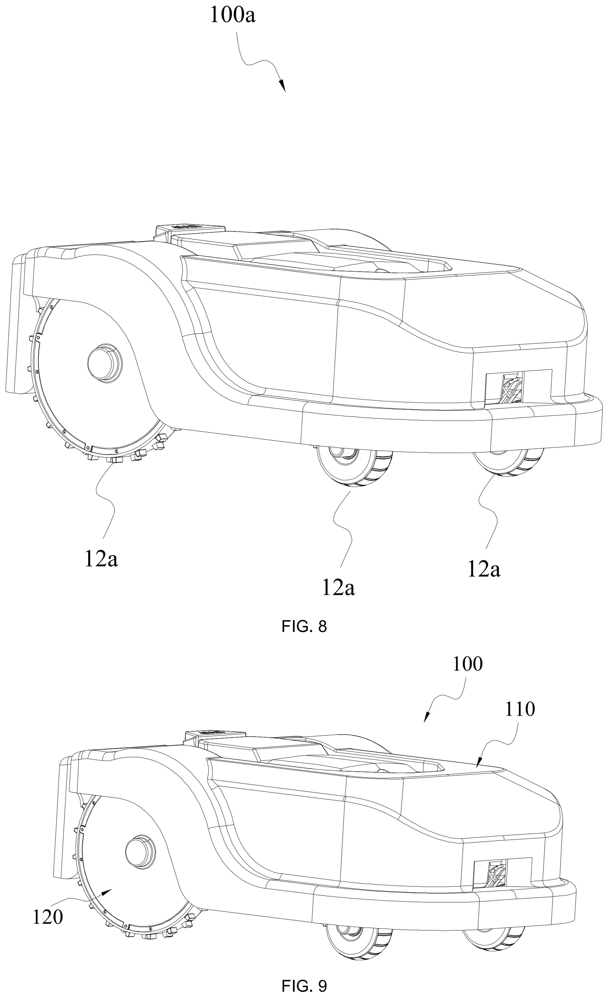

In some examples, the electric motor of the power tool is used for driving the output member to implement the function of the power tool. Specifically, as shown in FIG. 8, when the power tool is a smart mower 100a, the electric motor may be a mowing electric motor for driving a mowing blade to rotate, thereby implementing the mowing function of the smart mower. Of course, the electric motor may be a traveling electric motor for driving traveling wheels 12a, thereby implementing the traveling function of the smart mower 100a.

A power tool in the present application may be a handheld power tool, a garden tool, or a garden vehicle such as a vehicle-type mower, which is not limited here. The power tool in the present application includes, but is not limited to, a power tool that requires speed regulation, such as a screwdriver, an electric drill, a wrench, and an angle grinder, a sander and another power tool that may be used for grinding workpieces, a reciprocating saw, a circular saw, a jigsaw, and the like that may be used for cutting workpieces, and an electric hammer and another power tool that may be used for impact. These tools may also be garden tools, such as a hedge trimmer, a chainsaw, or a vehicle-type mower. Additionally, these tools such as a blender may also be used for other purposes. As long as these power tools can adopt the essence of the technical solutions disclosed in the present application, these power tools are within the scope of the present application.

FIG. 9 is a structural view of a power tool according to an example of the present application, specifically a structural view of a mower. The smart mower is used for intelligently performing mowing in a lawn and trimming the lawn. As shown in FIG. 9, the smart mower 100 includes at least a body 110, a traveling assembly 120, a motor assembly, a mowing element, and a power supply assembly (not specifically shown in the figure). The body 110 may be formed with or connected to a connecting portion for connecting or supporting the traveling assembly 120 and the motor assembly. The traveling assembly 120 and the mowing element are connected to the body 110 separately. The motor assembly can output power to drive the mowing element and the traveling assembly. As an example, the motor assembly includes a first motor and a second motor (not shown in the figure). The first motor is used for driving the traveling assembly to rotate to enable the smart mower 100 to travel, and the second motor is used for driving the mowing element to rotate to achieve mowing. It is to be understood that the motor assembly can output two sets of power through a transmission structure to separately drive the traveling assembly and the mowing element to rotate. The power supply assembly is used for supplying electrical energy to the motor.

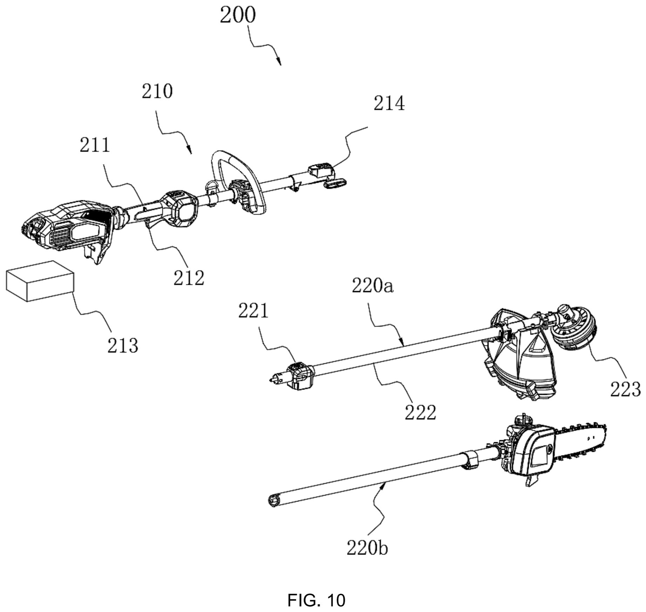

FIG. 10 is a structural view of another power tool according to an example of the present application, specifically a structural view of a mower. As shown in FIG. 10, a power tool 200 includes a tool body 210 and working attachments (220a and 220b). Specifically, the tool body 210 includes a grip 211, an operating switch 212, a power supply device 213, and a mounting portion 214. The working attachment 220a and the working attachment 220b are replaceably mounted on the mounting portion 214 of the tool body. The working attachment 220a is used as an example. The working attachment 220a includes a connecting portion 221, a connecting rod 222, and a working head 223. The working attachment 220a can be connected to the mounting portion 214 of the tool body 210 through the connecting portion 221, thereby implementing the function of a multi-head power tool. The power supply device 213 in the tool body 210 may be a battery pack or AC mains power. The tool body 210 is powered by the power supply device 213. In some examples, the power supply device 213 outputs AC. In some examples, the power supply device 213 outputs DC. The power supply device 213 may be, but is not limited to, the battery pack, and the battery pack is detachably mounted to the tool body 210.

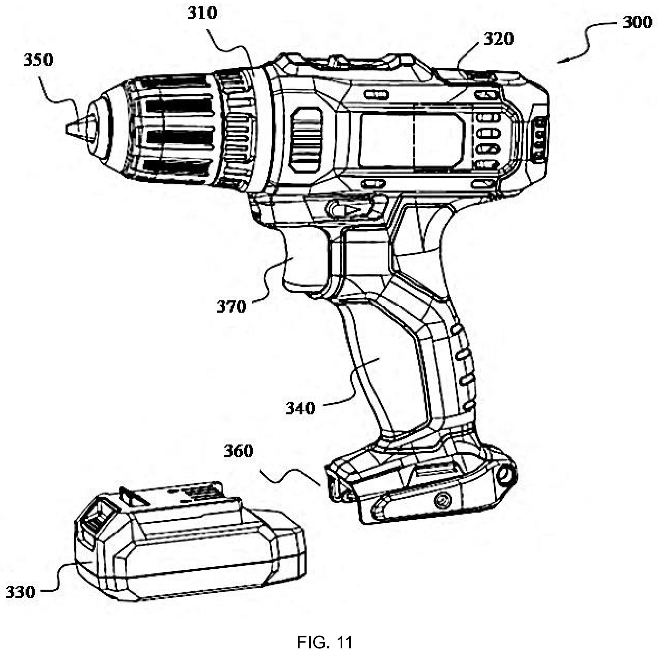

FIG. 11 is a structural view of another power tool according to an example of the present application, specifically a structural view of an electric drill. As shown in FIG. 11, a power tool 300 includes a housing 310, a motor 320, and a power supply device 330, and the motor 320 is disposed in the housing 310.

Specifically, the housing 310 can form an accommodation space for accommodating the motor 320, a transmission mechanism, and other electronic components such as a circuit board and is the body of the power tool 300. The housing 310 may further be formed with a grip 340 for the user to hold. The motor 320 can convert electrical energy into power which is transmitted to a functional piece 350. The functional piece 350 may be mounted at the front end of the housing 11.

The motor 320 may be an electric motor including stator windings and a rotor. In some examples, the motor 320 is a three-phase brushless motor including a rotor with a permanent magnet and three-phase stator windings U, V, and W that are commutated electronically. In some examples, the three-phase stator windings U, V, and W adopt a star connection. In some other examples, the three-phase stator windings U, V, and W adopt a delta connection. However, it is to be understood that other types of brushless electric motors are also within the scope disclosed in the present application. The brushless motor may include fewer than or more than three phases.

The functional piece 350 is used for implementing a function of the power tool 300, and the functional piece 350 is driven by the motor 320 to operate. Specifically, the functional piece 350 may be driven by the motor 320 through an output shaft and the transmission mechanism. Different power tools have different functional pieces. For example, as for the electric drill, the functional piece 350 is a drill bit (not shown) and used for implementing a drilling function.

The power supply device 330 supplies electrical energy to the power tool 300 through a power interface. In the example of the present application, a battery pack is used for supplying power to the power tool 300. The power tool 300 may include a tool mating portion 360 through which the battery pack is connected to the power tool. The above is merely illustrative and does not limit the present application. In other examples, the power supply device 330 may be an AC power supply, that is, the AC power supply is used for supplying power to the power tool. Preferably, the AC power supply is AC mains power of 120 V or 220 V. In this case, the power supply device 330 may include a power supply conversion unit that is connected to the AC and used for converting the AC into the DC usable by the power tool 300.

The power tool 300 may further include a speed regulation mechanism 370 that is at least used for setting the target rotational speed of the motor 320, that is to say, the speed regulation mechanism 370 is used for speed regulation of the motor 320. The speed regulation mechanism 370 may be, but is not limited to, a trigger, a knob, or the like. In the example of the present application, the speed regulation mechanism 370 is configured to be a trigger structure.

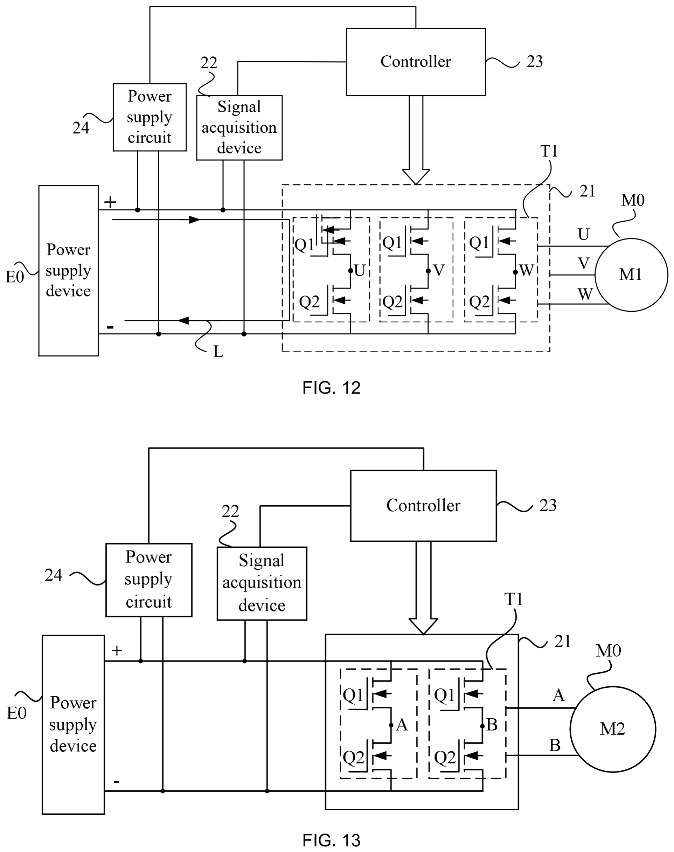

FIG. 12 is a schematic diagram of a circuit structure of a power tool according to an example of the present application. The circuit structure can be applied to any of the preceding power tools. Referring to FIG. 12, the power tool further includes a driver circuit 21, a signal acquisition device 22, and a controller 23. The driver circuit 21 includes multiple electronic switch groups T1 electrically connected between a power supply device E0 and a motor M0. The electronic switch group T1 includes a first electronic switch Q1 and a second electronic switch Q2. The first end of the first electronic switch Q1 is electrically connected to the positive terminal "+" of the power supply device E0, the second end of the first electronic switch Q1 is electrically connected to the first end of the second electronic switch Q2 and the motor M0, and the second end of the second electronic switch Q2 is electrically connected to the negative terminal "-" of the power supply device E0. The controller 23 is electrically connected to at least the driver circuit 21 to control the on and off of the electronic switches in each electronic switch group T1, thereby controlling the operation of the motor M0. The signal acquisition device 22 is used for acquiring the electrical signal of the motor M0 and transmitting the electrical signal to the controller 23. The controller 23 is configured to control the first electronic switch Q1 and the second electronic switch Q2 in each electronic switch group T1 to be alternately turned on with the first dead time, acquire electrical signals, and adjust the first dead time based on the acquired electrical signals.

Specifically, the number of the first electronic switch groups T1 in the driver circuit 21 may be set according to the type of the motor M0. When the motor M0 is a two-phase electric motor, only two electronic switch groups T1 may be provided. When the motor M0 is a three-phase electric motor, three electronic switch groups T1 may be provided. The electronic switches (that is, the first electronic switch Q1 and the second electronic switch Q2) in the electronic switch group T1 may be field-effect transistors (FETs), insulated-gate bipolar transistors (IGBTs), or the like, which are not specifically limited in the example of the present application.

For example, referring to FIG. 12, when the motor M0 is a brushless motor M1, the driver circuit 21 includes three electronic switch groups T1. The controller 23 controls the operation of the brushless motor M1 in the FOC manner to implement the function of the power tool 10.

Specifically, when the motor M0 is the brushless motor M1, the driver circuit 21 may be a three-phase bridge circuit including three electronic switch groups T1, that is, a three-phase bridge circuit formed by six electronic switches. Each first electronic switch Q1 may serve as a high-side drive switch and be electrically connected between the power supply bus and three phases of windings of the brushless motor M1. Each second electronic switch Q2 may serve as a low-side drive switch and be electrically connected between the three phases of windings of the brushless motor M1 and the ground wire.

For the three-phase brushless motor M1, when the operation of the brushless motor M1 is controlled in the FOC method, during normal driving, the upper and lower transistors in the same electronic switch group T1 are alternately turned on (that is, the first electronic switch Q1 and the second electronic switch Q2 in the same electronic switch group T1 are alternately turned on). Alternatively, when the brushless motor M1 is driven to operate in the brushless DC electric motor (BLDC) square wave control method, the upper and lower transistors in the same electronic switch group T1 may be alternately turned on during the freewheeling stage.

FIG. 13 is a schematic diagram of a circuit structure of another power tool according to an example of the present application. As shown in FIG. 13, the motor M0 may be a brushed motor M2. When the motor M0 is the brushed motor M2, the driver circuit 21 includes two electronic switch groups T1, and the driver circuit 21 outputs a drive signal to the brushless motor M2 according to the power signal provided by the power supply device E0 and the control signal provided by the controller 23.

Specifically, when the motor M0 is the brushed motor M2, the driver circuit 21 may be a two-phase bridge circuit including two electronic switch groups T1, that is, a two-phase bridge circuit formed by four electronic switches. Each first electronic switch Q1 may serve as a high-side drive switch and be electrically connected between the power supply bus and two phases of windings (the A phase winding and the B phase winding) of the brushed motor M2. Each second electronic switch Q2 may serve as a low-side drive switch and be electrically connected between the two phases of windings of the brushed motor M2 and the ground wire. For the two-phase brushed motor M2, during electric motor commutation, the upper and lower transistors in the same electronic switch group T1 are alternately turned on.

As introduced in the background art, when the controller 23 controls the first electronic switch Q1 and the second electronic switch Q2 in the same electronic switch group to be turned on alternately, the dead time during which both transistors are in the off state needs to be set. Since different electronic switches allow different values of the minimum dead time, adopting the fixed dead time may fail to satisfy the dead time requirements of the two electronic switches in the same electronic switch group.

Based on the preceding technical problem, the controller 23 may be configured to control the first electronic switch Q1 and the second electronic switch Q2 in each electronic switch group T1 to be alternately turned on with the first dead time, acquire electrical signals, and adjust the first dead time based on the acquired electrical signals.

Specifically, the controller 23 includes signal output terminals (not specifically shown in the figure) provided in one-to-one correspondence with the electronic switches. After the power tool 10 is started, the controller 23 outputs an initial control signal to the driver circuit 21 so that the first electronic switch Q1 and the second electronic switch Q2 in each electronic switch group T1 are alternately turned on with the preset initial first dead time. During this period, the signal acquisition device 22 acquires the electrical signal in a power supply loop L in real time. The power supply device E0 and the turned-on electronic switches Q1 in the electronic switch groups T1 form the power supply loop. The signal acquisition device 22 can output the electrical signal to the controller 23 so that the controller 23 can acquire the electrical signal. The electrical signal may be the current flowing through the power supply loop L (as shown in FIG. 12). It is to be noted that the power supply loop L may have multiple paths, which depends on the number of electronic switch groups. The controller 23 may adjust the first dead time of each electronic switch group T1 in sequence according to the electrical signal, that is, adjust the first dead time based on the initial first dead time. When the power tool is subsequently used, the motor M0 is controlled to operate with the adjusted first dead time, thereby ensuring the safety of the power tool during use.

In the power tool provided in the example of the present application, the controller outputs the control signal to the driver circuit to control the on or off state of each electronic switch in the driver circuit. The driver circuit outputs the drive signal to the motor according to the power signal and the control signal, thereby driving the motor. The signal acquisition device is provided to acquire the electrical signal of the power supply loop L in real time and transmit the electrical signal to the controller. The controller can adjust the dead time of each electronic switch group according to the electrical signal, thereby recalibrating the first dead time of each electronic switch group. Therefore, the first electronic switch and the second electronic switch in the same electronic switch group are not turned on at the same time and the duration during which the first electronic switch and the second electronic switch in the same electronic switch group are off at the same time is not too long, thereby ensuring the usage safety and service life of the power tool during subsequent use.

In some examples, the controller 23 is further configured to output the control signal to the driver circuit 21 to acquire the electrical signal from the power supply loop L and set the calibrated dead time of each electronic switch group T1 based on the acquired electrical signal and the current dead time of at least one electronic switch group T1.

Specifically, based on the fact that the controller 23 adjusts the first dead time of a certain electronic switch group T1 according to the electrical signal of the power supply loop L, the controller 23 may perform further adjustment according to the current first dead time of this electronic switch group T1. The controller 23 may output the control signal to the driver circuit 21. The control signal can control the electronic switches in the same electronic switch group T1 to be alternately turned on with the initial first dead time. The controller 23 may acquire the electrical signal provided by the signal acquisition device 22 in real time and acquire the current first dead time of the electronic switch group T1. When the current first dead time of the electronic switch group T1 is greater than the minimum allowable dead time (that is, the preset dead time), the first dead time of the electronic switch group T1 is gradually adjusted. During the adjustment process, the electrical signal is continuously detected. When the electrical signal satisfies a preset condition, the current first dead time is determined as the calibrated dead time of the electronic switch group T1.

The first dead time of each electronic switch group T1 in the driver circuit 21 may be adjusted, that is, after the calibrated dead time of the current electronic switch group T1 is determined, the values of the calibrated dead time of other electronic switch groups T1 may be determined in sequence in the same manner. In this manner, the calibrated dead time of each electronic switch group T1 can be determined separately so that the calibrated dead time of each electronic switch group T1 is not too large and the first electronic switch Q1 and the second electronic switch Q2 in each electronic switch group T1 are not turned on at the same time. Alternatively, the first dead time of one of the electronic switch groups T1 may be adjusted. Since the commonly used electronic switches have good consistency, the calibrated dead time of one electronic switch group T1 may be determined as the calibrated dead time of other electronic switch groups T1 in the driver circuit 21, thereby simplifying the calibration process while ensuring that the calibrated dead time of each electronic switch group T1 is not too large and the first electronic switch Q1 and the second electronic switch Q2 are not turned on at the same time. After the calibrated dead time is determined, when the power tool is used in the future, the two electronic switches in each electronic switch group T1 in the driver circuit may be controlled to be alternately turned on with the calibrated dead time, thereby ensuring the usage safety of the power tool.

In some examples, the power supply system of the power tool may further include a power supply circuit 24 for supplying power to at least the controller 23. The power supply circuit 24 is electrically connected to the power supply device E0 to convert the electrical energy of the power supply device E0 into a power supply voltage adapted to the first controller 23 and output the power supply voltage. For example, in some examples, to supply power to the controller 23, the power supply circuit 24 reduces the voltage from the power supply device E0 to 15 V to supply power to the controller 23.

In the power tool provided in the example of the present application, the controller can adjust the first dead time of each electronic switch group according to the electrical signal of the power supply loop and the first dead time of the electronic switch group in the driver circuit during the operation of the motor, thereby determining the calibrated dead time that can ensure that the first electronic switch and the second electronic switch in the same first electronic switch group are not turned on at the same time and the duration is not too long. In this manner, during the subsequent use of the power tool, the motor operation can be controlled with the calibrated dead time, thereby ensuring the usage safety and service life of the power tool.

In some examples, the controller 23 is configured to determine whether the electrical signal satisfies a preset condition. The preset condition includes that the electrical signal includes the current flowing through the power supply loop. The preset condition includes that the absolute value of the difference between the currents in power supply loops is less than or equal to a preset current difference, and the maximum amplitude of the current in each power supply loop is less than a preset current amplitude.

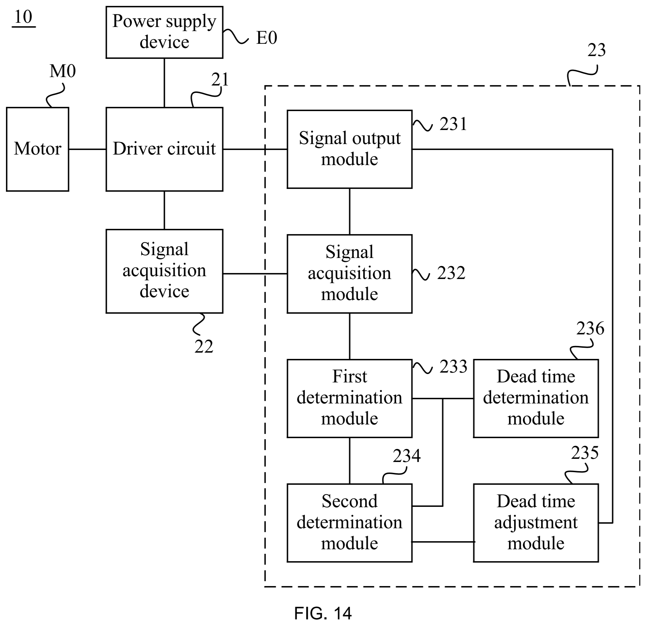

Specifically, the controller 23 may be a single-chip microcomputer of a certain type selected according to design requirements. The single-chip microcomputer may include an enable terminal, and the signal received by the enable terminal may be a start signal of the power tool. The controller 23 may be configured to include a signal output module 231. FIG. 14 is a schematic diagram of a system architecture of a power tool according to an example of the present application. As shown in FIG. 14, the signal output module 231 may acquire the enable signal of the enable terminal. When it is determined that the enable signal is a valid level signal, the control signal may be outputted to each electronic switch in the driver circuit 21 so that the driver circuit 21 formed by the multiple electronic switches outputs the drive signal to the motor according to the received control signal, thereby driving the motor to rotate.

The controller 23 may be configured to include a signal acquisition module 232. When the signal output module 231 outputs the control signal, the signal acquisition module 232 acquires the electrical signal provided by the signal acquisition device 22 and the current first dead time of one of the electronic switch groups T1 in real time. The electrical signal may be the current flowing through the power supply loop. Before the signal output module 231 outputs the control signal, initialization may be performed first, that is, the initial dead time of each electronic switch group T1 and the initial duty cycle of the control signal may be determined first. On this basis, the first dead time of the electronic switch group T1 is adjusted according to the electrical signal in the power supply loop and the current first dead time of the detected electronic switch group T1.

Too large a difference between the phase currents of the electric motor or too large an amplitude of the phase current affects the normal operation of the electric motor. Therefore, after multiple electrical signals of the power supply loops and the current first dead time of the detected electronic switch group T1 are acquired, the controller 23 may determine whether the multiple electrical signals satisfy the preset condition. Specifically, the controller 23 may be configured to include a first determination module 233, and the first determination module 233 can determine whether the electrical signal satisfies the preset condition. The preset condition may be that the absolute value of the difference between the currents flowing through the power supply loops is less than a preset current difference, and the maximum amplitude of the current flowing through each power supply loop is less than a preset current amplitude. For example, the case where the electric motor is a three-phase brushless motor is used as an example. First, differences between any two of the three currents may be obtained to determine whether the absolute values of the differences between any two of the three currents are all less than or equal to the preset current difference. If it is determined that the absolute values of the differences between any two of the three currents are less than or equal to the preset current difference, it is further determined whether the maximum amplitudes of the currents among the three currents are all less than the preset current amplitude. If it is determined that the maximum amplitudes of the currents among the three currents are all less than the preset current amplitude, it can be determined that the electrical signals satisfy the preset condition. If it is determined that the absolute values of the differences between any two of the three currents are greater than or equal to the preset current difference, or if it is determined that the maximum amplitude of at least one of the three currents is greater than or equal to the preset current amplitude, it can be determined that the electrical signals in the power supply loops do not satisfy the preset condition.

In some examples, the controller 23 is configured to determine whether the current dead time of the detected electronic switch group T1 is greater than the preset dead time when the electrical signal satisfies the preset condition.

Specifically, the longer the dead time of the detected electronic switch group T1 is, the smaller the possibility that two electronic switches in the detected electronic switch group T1 are turned on at the same time is. If the dead time is too long, the operation of the electric motor is affected. Therefore, after determining that the electrical signal satisfies the preset condition, the controller 23 may determine whether the current first dead time of the detected electronic switch group T1 is greater than the preset dead time. The controller 23 may be configured to include a second determination module 234, and the second determination module 234 can determine the current first dead time of the detected electronic switch group T1. The preset dead time may be the minimum dead time that ensures that the first electronic switch Q1 and the second electronic switch Q2 in the detected electronic switch group T1 cannot be turned on at the same time. If it is determined that the current first dead time of the detected electronic switch group T1 is greater than the preset dead time, it can be determined that the first dead time in this case is too large and there is room for reduction. If it is determined that the current first dead time is less than or equal to the preset dead time, it can be determined that the current first dead time has been reduced to a limit that can ensure that the upper and lower transistors are not turned on at the same time and the current first dead time cannot be further reduced.

In some examples, the controller 23 is configured to control the first dead time of the electronic switch group T1 to decrease by a preset step size when determining that the current first dead time of the detected electronic switch group T1 is greater than the preset dead time. The first dead time of the electronic switch group is adjusted repeatedly.

Specifically, the controller 23 may be configured to include a dead time adjustment module 235. After the second determination module 234 determines that the current first dead time of the detected electronic switch group T1 is greater than the preset dead time, the dead time adjustment module 235 can reduce the first dead time of this electronic switch group T1 by the preset step size. The reduced first dead time is transmitted to the signal output module 231 so that through the signal output module 231, the controller 23 continues outputting the control signal with the first dead time reduced to each electronic switch in the driver circuit 21. During this process, the electrical signal and the current first dead time of the detected electronic switch group T1 are continuously acquired. The second determination module 234 determines whether the current first dead time of the detected electronic switch group T1 is greater than the preset dead time. The dead time adjustment module 235 readjusts the current first dead time, that is, reduces the first dead time again by the preset step size. The above is repeated until it is determined that the electrical signal does not satisfy the preset condition or it is determined that the current first dead time of the detected electronic switch group T1 is less than or equal to the preset dead time, and then the adjustment of the first dead time is stopped. In this case, a dead time determination module 236 determines the current first dead time of this electronic switch group T1 as the calibrated dead time of this electronic switch group T1. Furthermore, the calibrated dead time may be further determined as the calibrated dead time of each electronic switch group T1. The preset step size may be set according to design requirements and is not specifically limited in the example of the present application.

In some examples, in other feasible examples of the present application, when the calibrated dead time of the electronic switch group T1 is determined, the calibrated dead time of each electronic switch group T1 may be determined in sequence, thereby improving the accuracy of the calibrated dead time of the electronic switch groups T1. Since the electronic switches used in the same driver circuit 21 generally have good consistency, it is sufficient to determine the calibrated dead time of one electronic switch group T1. That is, after the calibrated dead time of one electronic switch group T1 is determined, the calibrated dead time of other electronic switch groups T1 in the driver circuit 21 is configured to be equal to the calibrated dead time of the detected electronic switch group T1. In this manner, the process of determining the calibrated dead time can be simplified.

Since the process of determining the calibrated dead time is usually completed in a short time when the power tool is started, the process of determining the calibrated dead time can be completed in a shorter time by determining the calibrated dead time of one of the electronic switch groups T1. Therefore, the controller 23 can output the control signal as quickly as possible according to the determined calibrated dead time to control the operation of the power tool. The hysteresis response caused by determining the calibrated dead time is weakened, thereby improving the user experience.

In some examples, the controller 23 is configured to, after determining the calibrated dead time of the detected electronic switch group T1, use the sum of the calibrated dead time and the preset time margin as the final calibrated dead time of each electronic switch group T1.

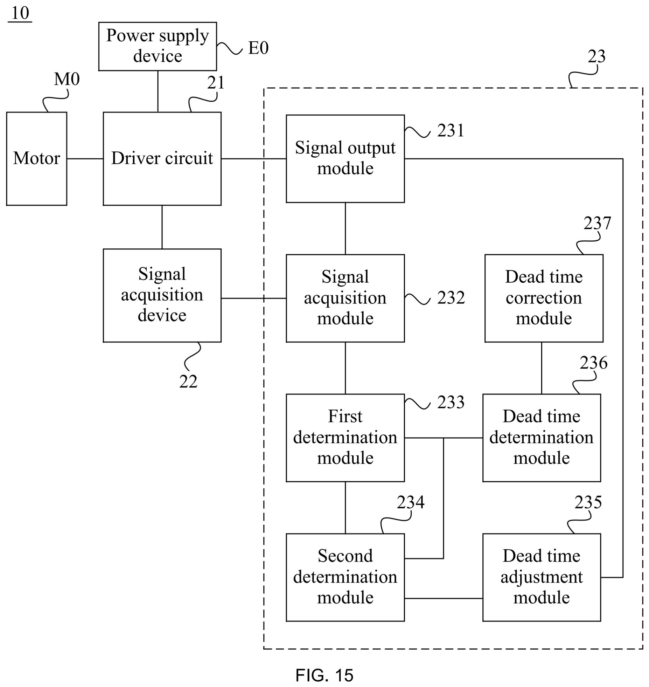

Specifically, when the current first dead time of the electronic switch group T1 is less than or equal to the preset dead time, the dead time determination module 236 determines that the first dead time of the electronic switch group T1 in this case is the calibrated dead time. Therefore, the calibrated dead time may be less than the preset dead time. In this manner, when the controller 23 outputs the control signal to the driver circuit 21 according to the calibrated dead time, the two electronic switches in each electronic switch group T1 may be turned on at the same time, which may cause a dangerous situation. Specifically, the controller 23 may be configured to include a dead time correction module. FIG. 15 is a schematic diagram of a system architecture of another power tool according to an example of the present application. As shown in FIG. 15, a dead time correction module 237 may correct the calibrated dead time after determining the calibrated dead time, that is, may increase a certain time margin (that is, the preset time margin). In this manner, it can be ensured that the corrected calibrated dead time is greater than or equal to the preset dead time. The case where the two electronic switches in the electronic switch group T1 are turned on at the same time can be avoided. Moreover, on this basis, the setting of the preset time margin does not make the calibrated dead time too large. The preset time margin may be set according to design requirements and is not specifically limited in the present application.

In some examples, the controller 23 is configured to, after determining the calibrated dead time, reset the calibrated dead time when the usage duration of the power tool 10 exceeds a preset duration and/or the number of starts of the power tool 10 reaches a preset number.

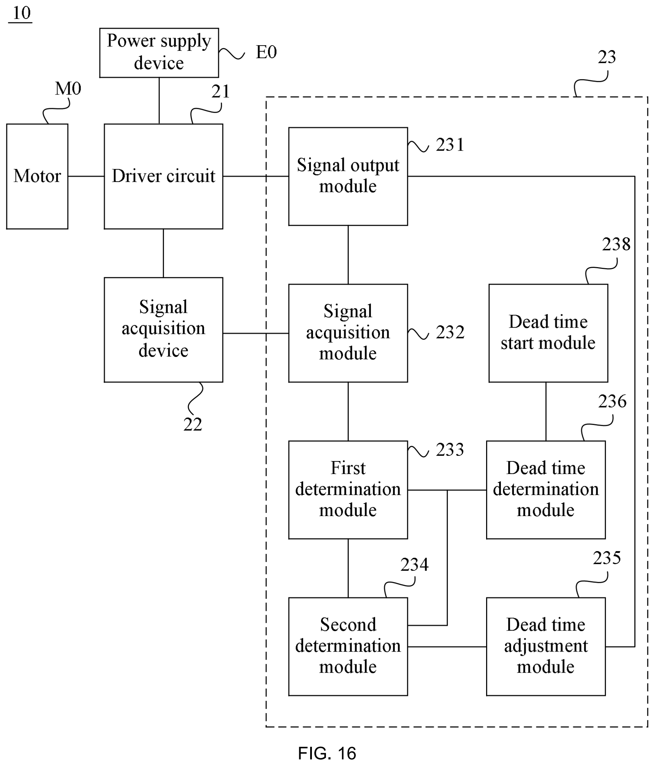

Specifically, as the operating time of the power tool becomes longer and longer, the parameters of the electronic switches may drift. Therefore, using the same calibrated dead time for a long time may result in the calibrated dead time being unable to satisfy the normal operation requirements of the electric motor and the safety requirements of the electronic switch groups T1. Therefore, after the controller 23 is started, it can first be determined whether the calibrated dead time of each electronic switch group T1 needs to be updated during this startup. Specifically, the controller 23 may be configured to include a dead time adjustment and start module 238. FIG. 16 is a schematic diagram of a system architecture of another power tool according to an example of the present application. As shown in FIG. 15, the dead time adjustment and start module 238 may first determine whether the usage duration of the power tool exceeds the preset duration and/or whether the number of starts of the power tool reaches the preset number since the last determination of the calibrated dead time. If any of the preceding conditions is satisfied, the process of determining the calibrated dead time is started, that is, the functions of the signal output module 231, the signal acquisition module 232, the first determination module 233, the second determination module 234, the dead time adjustment module 235, and the dead time determination module 236 in the controller 23 are implemented in sequence.

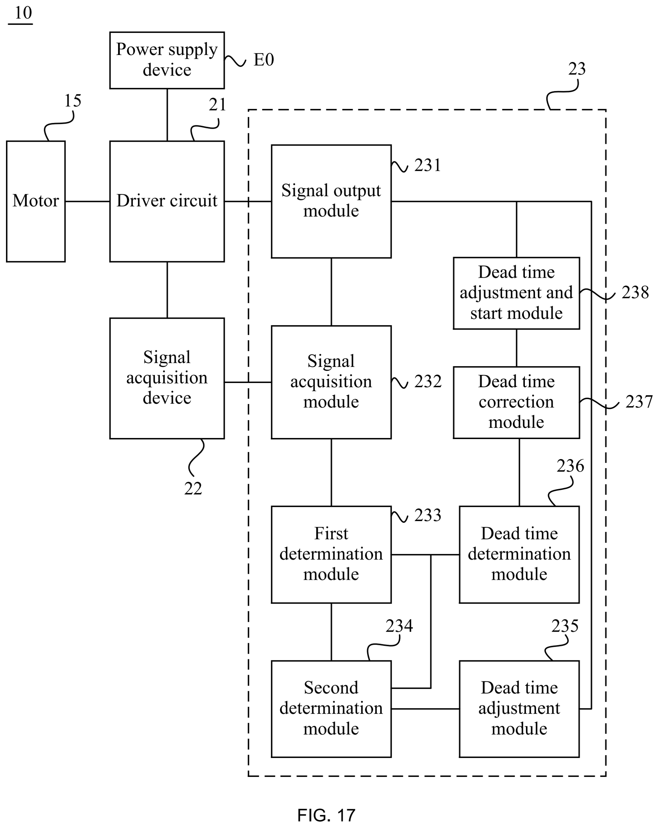

FIG. 17 is a schematic diagram of a system architecture of another power tool according to an example of the present application. As shown in FIG. 17, when the controller 23 includes the dead time correction module 237, the dead time adjustment and start module 238 may acquire the usage duration and/or the number of starts of the power tool after the calibrated dead time is corrected by the dead time correction module 237 and determine whether to update the calibrated dead time based on the usage duration and/or the number of starts.

For example, in other examples of the present application, other cases of updating the calibrated dead time may also be included. For example, when the power tool is used for the first time, the calibrated dead time may be updated first after the startup. The calibrated dead time may also be updated when the power tool is used for the first time after the power tool is returned to the factory for repair. Alternatively, an initialization control button may be provided on the power tool, and the calibrated dead time is updated when the controller 23 receives an initialization signal sent by the initialization control button. After the controller is initialized, the control signal may be initialized to the preset initial first dead time, and the first dead time may be updated on this basis, that is, the calibrated dead time may be re-determined.

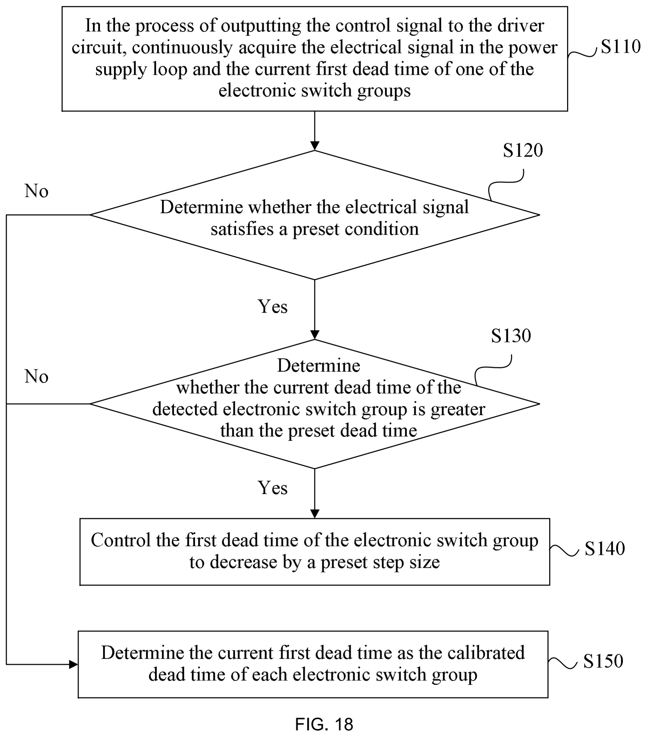

Based on the same inventive concept, the present application further provides a method for calibrating the dead time of a power tool. The method may be performed by the controller in the power tool. FIG. 18 is a flowchart of a method for calibrating the dead time of a power tool according to an example of the present application. As shown in FIG. 18, the method includes the steps below.

In S110, in the process of outputting the control signal to the driver circuit, the electrical signal in the power supply loop and the current first dead time of one of the electronic switch groups are continuously acquired.

In S120, whether the electrical signal satisfies a preset condition is determined. If so, S130 is performed. If not, S150 is performed.

The preset condition includes that the absolute value of the difference between the currents in the power supply loops is less than the preset current difference, and the maximum amplitude of the current in each power supply loop is less than the preset current amplitude.

In S130, whether the current dead time of the detected electronic switch group is greater than the preset dead time is determined. If so, S140 is performed. If not, S150 is performed.

In S140, the first dead time of the electronic switch group is controlled to decrease by a preset step size.

In S150, the current first dead time is determined as the calibrated dead time of each electronic switch group.

In the method for calibrating the dead time of a power tool provided in the example of the present application, the first dead time of each electronic switch group can be adjusted according to the electrical signal in the power supply loop and the first dead time of the electronic switch group in the driver circuit during the operation of the electric motor, thereby determining the calibrated dead time that can ensure that the first electronic switch and the second electronic switch in the same first electronic switch group are not turned on at the same time and the duration is not too long. In this manner, during the subsequent use of the power tool, the motor operation can be controlled with the calibrated dead time, thereby ensuring the usage safety and service life of the power tool.

The example of the present application further provides a power supply system of a power tool. The power supply system of a power tool is suitable for the power tool provided in the example of the present application and includes at least a power supply device, a charging device, and an electrical energy transmission control module. The power supply device may be the power supply device E0 that provides the power signal to the driver circuit of the power tool in the preceding example and may include at least one battery pack for supplying electrical energy to the power tool. The charging device is used for connecting the power supply device to charge the power supply device. The electrical energy transmission control module may implement the electrical energy conversion function. For example, the electrical energy transmission control module may convert the power output of the charging device into a power supply compatible with the power supply device or may convert the power output of the energy device into a power supply compatible with the power tool. In some examples, the electrical energy transmission control module may be disposed in the charging device and/or the power supply device or integrated into a separate adapter, which is not specifically limited in the present application.

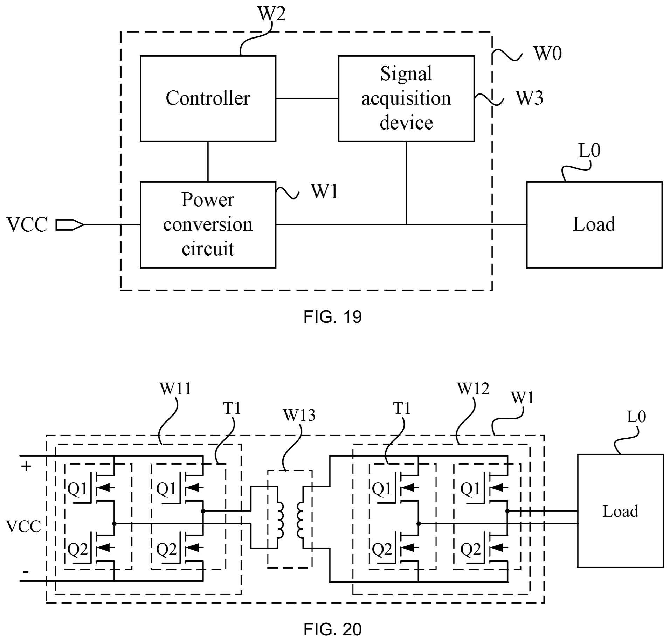

FIG. 19 is a schematic diagram of a system architecture of an electric energy transmission control module according to an example of the present application. As shown in FIG. 19, an electrical energy transmission control module W0 includes a power conversion circuit W1, a controller W2, and a signal acquisition device W3. FIG. 20 is a schematic diagram illustrating the structure of a power conversion circuit according to an example of the present application. In conjunction with FIGS. 19 and 20, the power conversion circuit W1 includes multiple electronic switch groups T1. The electronic switch group T1 includes the first electronic switch Q1 and the second electronic switch Q2 that are connected in series. The controller W2 is electrically connected to at least the power conversion circuit W1 to control the on and off of the electronic switches in the electronic switch groups T1, thereby controlling the power conversion circuit W1 to perform power conversion. The signal acquisition device W3 is used for acquiring the electrical signal outputted by the power conversion circuit W1 and transmitting the electrical signal to the controller W2. The controller W2 is configured to control the first electronic switch Q1 and the second electronic switch Q2 in each electronic switch group T1 to be alternately turned on with the first dead time, acquire electrical signals, and adjust the first dead time based on the acquired electrical signals.

For example, the power conversion circuit W1 may be a DC/DC converter, a DC/AC converter, an AC/DC converter, a switching power supply, or other circuits with a voltage conversion function and a process of alternating conduction of upper and lower transistors. The converter in the present application is preferably a DC/DC converter. FIG. 20 is a schematic diagram of the circuit structure of a DC/DC converter. As shown in FIG. 20, the DC/DC converter includes an inverter unit W11, a rectifier unit W12, and an isolation transmission unit W13. The inverter unit W11 is used for inverting the received DC signal into an AC signal. The isolation transmission unit W13 is used for isolating and transmitting the AC signal outputted by the inverter unit W11 to the rectifier unit W12. The rectifier unit W12 is used for rectifying the received AC signal into a DC power signal required by the driver circuit. The inverter unit W11 and the rectifier unit W12 each include two electronic switch groups T1. Each electronic switch group T1 includes the first electronic switch Q1 and the second electronic switch Q2 that are connected in series. That is, the first electrode of the first electronic switch Q1 receives a high level signal, the second electrode of the first electronic switch Q1 is electrically connected to the first electrode of the second electronic switch Q2, and the second electrode of the second electronic switch Q2 receives a low level signal or is grounded. When the DC/DC converter outputs the DC power signal to the load L0, the controller W2 controls the two electronic switches in each electronic switch group T1 to be alternately turned on to output a DC voltage signal. The electronic switches (that is, the first electronic switch Q1 and the second electronic switch Q2) in each electronic switch group T1 may be FETs, IGBTs, or the like, which are not specifically limited in the example of the present application. For the power supply device, the load L0 may be a power tool, specifically the driver circuit 21 and the controller 23 in the power tool. For the charging device, the load L0 may be the power supply device.

The controller W2 includes signal output terminals (not specifically shown in the figure) provided in one-to-one correspondence with the electronic switches. Before the power supply device and the charging device operate, the first dead time of the electronic switch group T1 may be calibrated. The controller W2 first outputs an initial control signal (which may be a PWM signal) to the power conversion circuit W1 so that the first electronic switch Q1 and the second electronic switch Q2 in each electronic switch group T1 are alternately turned on with the initial first dead time, and the power conversion circuit W1 can perform power conversion and output the converted power to the load. During this period, the signal acquisition device W3 may continuously acquire the electrical signal outputted by the power conversion circuit W1 and output the electrical signal to the controller W2 so that the controller W2 can acquire the electrical signal. The electrical signal may be the current outputted by the power conversion circuit W1. The controller W2 may adjust the values of the first dead time of the electronic switch groups T1 in sequence according to the electrical signals. The controller 23 may adjust the first dead time when determining that the operation state outputted by the power conversion circuit W1 is normal according to the electrical signal.

In the power supply system of the power tool provided in the example of the present application, the controller outputs the control signal to the power conversion circuit to control the on or off state of each electronic switch in the power conversion circuit so that the power conversion circuit can output the drive signal to the motor. The signal acquisition device is provided to acquire the electrical signal outputted by the power conversion circuit in real time and transmit the electrical signal to the controller. The controller can adjust the dead time of each electronic switch group according to the electrical signal during the operation of the power conversion circuit to recalibrate the first dead time of each electronic switch group so that the first electronic switch and the second electronic switch in the same electronic switch group are not turned on at the same time and the duration during which the first electronic switch and the second electronic switch in the same electronic switch group are off at the same time is not too long. In this manner, the usage safety and service life of the power tool can be ensured during the subsequent use of the power tool.

In some examples, the controller W2 is further configured to output the control signal to the power conversion circuit W1 and in the process of outputting the control signal, set the calibrated dead time of each electronic switch group T1 according to the electrical signal and the current first dead time of at least one electronic switch group T1.

Specifically, based on the fact that the controller W2 adjusts the first dead time of a certain electronic switch group T1 according to the electrical signal, the controller W2 may perform further adjustment according to the current first dead time of this electronic switch group T1. The controller W2 may acquire the electrical signal provided by the signal acquisition device W3 in real time and at the same time, acquire the current first dead time of the electronic switch group T1. The current first dead time of one of the electronic switch groups T1 may be acquired. When it is determined based on the current outputted by the power conversion circuit W1 that the operation state of the power conversion circuit W1 is normal and the current first dead time of the electronic switch group T1 is greater than the minimum allowable dead time (that is, the preset dead time), the first dead time of the electronic switch group T1 is gradually adjusted. During the adjustment process, the electrical signal is continuously detected to determine whether the power conversion circuit W1 operates normally. When it is determined that the operation state of the power conversion circuit W1 is abnormal or the current dead time of the detected electronic switch group T1 is less than or equal to the preset dead time, the dead time adjustment is stopped and the current first dead time is determined as the calibrated dead time of this electronic switch group T1.

The first dead time of each electronic switch group T1 in the power conversion circuit W1 may be adjusted. That is, after the calibrated dead time of the current electronic switch group T1 is determined, the values of the calibrated dead time of other electronic switch groups T1 may be determined in sequence in the same manner. In this manner, the calibrated dead time of each electronic switch group T1 can be determined separately so that the calibrated dead time of each electronic switch group T1 is not too large and the first electronic switch Q1 and the second electronic switch Q2 in each electronic switch group T1 are not turned on at the same time. The safety of the power conversion circuit W1 during operation and the service life of the power supply system of the power tool 10 can be ensured. Alternatively, the first dead time of one of the electronic switch groups T1 may be adjusted. Since the commonly used electronic switches have good consistency, the calibrated dead time of one electronic switch group T1 may be determined as the calibrated dead time of the other electronic switch groups T1 in the power conversion circuit W1. The calibration process can be simplified on the basis of ensuring that the calibrated dead time of each electronic switch group T1 is not too large and the first electronic switch Q1 and the second electronic switch Q2 are not turned on at the same time.

In the power supply system of the power tool provided in the example of the present application, the controller can adjust the dead time of each electronic switch group according to the electrical signal outputted by the power conversion circuit and the first dead time of the electronic switch group during the process of controlling the operation of the power conversion circuit. Therefore, the calibrated dead time can be determined to ensure that the first electronic switch and the second electronic switch in the same first electronic switch group are not turned on at the same time and the duration is not too long. In this manner, the usage safety and service life of the power tool can be ensured during the subsequent use of the power tool.

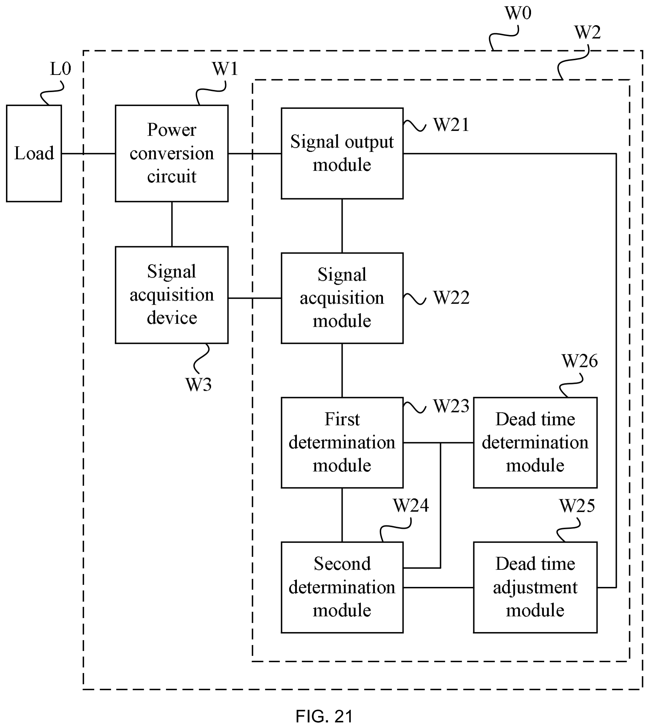

The controller W2 may be a single-chip microcomputer of a certain type selected according to design requirements. The single-chip microcomputer may include an enable terminal, and the signal received by the enable terminal may be a start signal of the power tool. The controller W2 may be configured to include a signal output module W21. FIG. 21 is a schematic diagram of a system architecture of another electric energy transmission control module according to an example of the present application. As shown in FIG. 21, the signal output module W21 may acquire the enable signal of the enable terminal. When it is determined that the enable signal is a valid level signal, the control signal may be outputted to each electronic switch in the power conversion circuit W1 so that the power conversion circuit W1 formed by the multiple electronic switches performs power conversion according to the received control signal.

The controller W2 may be configured to include a signal acquisition module W22. When the signal output module W21 outputs the control signal, that is, during the process of the power conversion circuit W1, the signal acquisition module W21 acquires the electrical signal provided by the signal acquisition device W3 and the current first dead time of one of the electronic switch groups T1 in real time. The electrical signal may be the current outputted by the power conversion circuit W1. To simplify the signal acquisition process, in the example of the present application, preferably, the electrical signal is the current signal outputted by the power conversion circuit W1. Before the signal output module W21 outputs the control signal, initialization may be performed first, that is, the initial dead time of each electronic switch group T1 and the initial duty cycle of the control signal may be determined first. On this basis, the first dead time of the electronic switch group T1 is adjusted according to the electrical signal in the power conversion circuit W1 and the current first dead time of the detected electronic switch group T1.

The controller W2 is configured to include a first determination module W23. After the electrical signal outputted by the power conversion circuit W1 and the current first dead time of the detected electronic switch group T1 are acquired, the first determination module W23 determines whether the working state of the power conversion circuit W1 is normal according to the electrical signal. When the electrical signal includes the output current of the power conversion circuit W1, whether the output current does not exceed a preset current amplitude may be determined. If it is determined that the output current does not exceed the preset amplitude, it indicates that the output current of the power conversion circuit W1 is within a normal threshold range and the working state is normal. If it is determined that the output current is greater than the preset current amplitude, the output current of the power conversion circuit W1 is too large and the working state is abnormal. The preset current amplitude may be a limit value indicating that the current amplitude is within a normal operating range, and the value of the preset current amplitude may be set according to design requirements. When the electrical signal is a voltage signal, the working state of the power conversion circuit W1 may be determined based on the same principle.

In some examples, the controller W2 is configured to determine whether the current dead time of the detected electronic switch group T1 is greater than the preset dead time when the electrical signal satisfies the preset condition. Specifically, the controller W2 may be configured to include a second determination module W24. The preset dead time may be the minimum dead time that ensures that the first electronic switch Q1 and the second electronic switch Q2 in the detected electronic switch group T1 cannot be turned on at the same time. If it is determined that the current first dead time of the detected electronic switch group T1 is greater than the preset dead time, it can be determined that the first dead time in this case is too large and there is room for reduction. If it is determined that the current first dead time is less than or equal to the preset dead time, it can be determined that the current first dead time has been reduced to a limit that can ensure that the upper and lower transistors are not turned on at the same time and the current first dead time cannot be further reduced.

In some examples, the controller W2 is configured to control the first dead time of the electronic switch group T1 to decrease by a preset step size when determining that the current first dead time of the detected electronic switch group T1 is greater than the preset dead time. The first dead time of the electronic switch group is adjusted repeatedly.

Specifically, the controller W2 may be configured to include a dead time adjustment module W25. After the second determination module W24 determines that the current first dead time of the detected electronic switch group T1 is greater than the preset dead time, the dead time adjustment module W25 can reduce the first dead time of this electronic switch group T1 by the preset step size. The reduced first dead time is transmitted to the signal output module W21 so that through the signal output module W21, the controller W2 continues outputting the control signal with the first dead time reduced to each electronic switch in the power conversion circuit W1. During this process, the electrical signal outputted by the power conversion circuit W1 and the current first dead time of the detected electronic switch group T1 are continuously acquired so that the first determination module W23 can determine whether the power conversion circuit W1 is in a normal operation state according to the electrical signal. Moreover, when the power conversion circuit W1 in this case is in the normal operation state, the second determination module 234 determines whether the current first dead time of the electronic switch group T1 is greater than the preset dead time. When the power conversion circuit W1 operates normally and the current first dead time of the detected electronic switch group T1 is greater than the preset dead time, the dead time adjustment module W25 readjusts the current first dead time, that is, reduces the first dead time again with the preset step size. The above is repeated until it is determined that the electrical signal outputted by the power conversion circuit W1 does not satisfy the preset condition (that is, it is determined that the operation of the power conversion circuit W1 is abnormal) or it is determined that the current first dead time of the detected electronic switch group T1 is less than or equal to the preset dead time, and then the adjustment of the first dead time is stopped. Moreover, a dead time determination module W26 determines the current first dead time of this electronic switch group T1 as the calibrated dead time of this electronic switch group T1 and further determines the calibrated dead time as the calibrated dead time of the electronic switch groups T1. The preset step size may be set according to design requirements and is not specifically limited in the example of the present application.

In some examples, the controller W2 is configured to, after determining the calibrated dead time of the detected electronic switch group T1, use the sum of the calibrated dead time and the preset time margin as the final calibrated dead time of each electronic switch group T1.

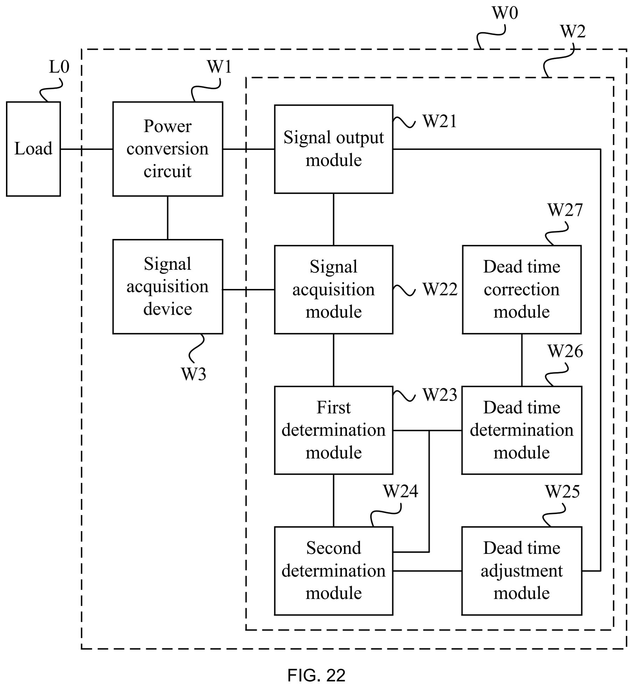

Specifically, when the current first dead time of the electronic switch group T1 is less than or equal to the preset dead time, the dead time determination module W26 determines that the first dead time of the electronic switch group T1 in this case is the calibrated dead time. Therefore, the calibrated dead time may be less than the preset dead time. In this manner, when the controller W2 outputs the control signal to the power conversion circuit W1 according to the calibrated dead time, the two electronic switches in each electronic switch group T1 may be turned on at the same time, which may cause a dangerous situation. FIG. 22 is a schematic diagram of a system architecture of another electric energy transmission control module according to an example of the present application. As shown in FIG. 22, the controller W2 may be specifically configured to include a dead time correction module W27. The dead time correction module W27 may correct the calibrated dead time after determining the calibrated dead time, that is, may increase a certain time margin (that is, the preset time margin). It can be ensured that the corrected calibrated dead time is greater than or equal to the preset dead time, thereby preventing the two electronic switches in the electronic switch group T1 from being turned on at the same time. On this basis, the setting of the preset time margin does not make the calibrated dead time too large. The preset time margin may be set according to design requirements and is not specifically limited in the example of the present application.

In some examples, the controller W2 is configured to, after determining the calibrated dead time, reset the calibrated dead time when the working duration of the power conversion circuit W1 exceeds a preset duration.

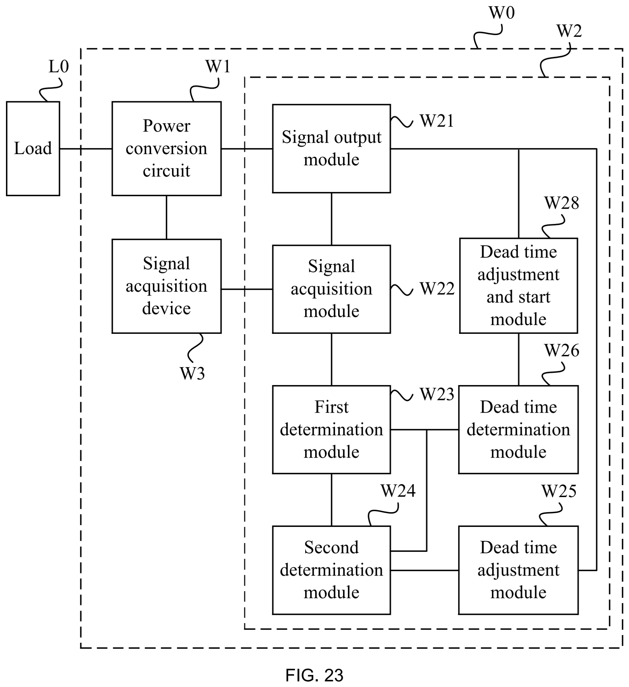

Specifically, FIG. 23 is a schematic diagram of a system architecture of another electric energy transmission control module according to an example of the present application. As shown in FIG. 23, the controller W2 may be configured to include a dead time adjustment and start module W28. After each start of the power tool, the dead time adjustment and start module W28 may first determine whether the cumulative working duration of the power conversion circuit W1 exceeds a preset duration since the last determination of the calibrated dead time. If the cumulative working duration exceeds the preset duration, the process of determining the calibrated dead time is started. That is, the functions of the signal output module W21, the signal acquisition module W22, the first determination module W23, the second determination module W24, the dead time adjustment module W25, and the dead time determination module W26 in the controller W2 are implemented in sequence.

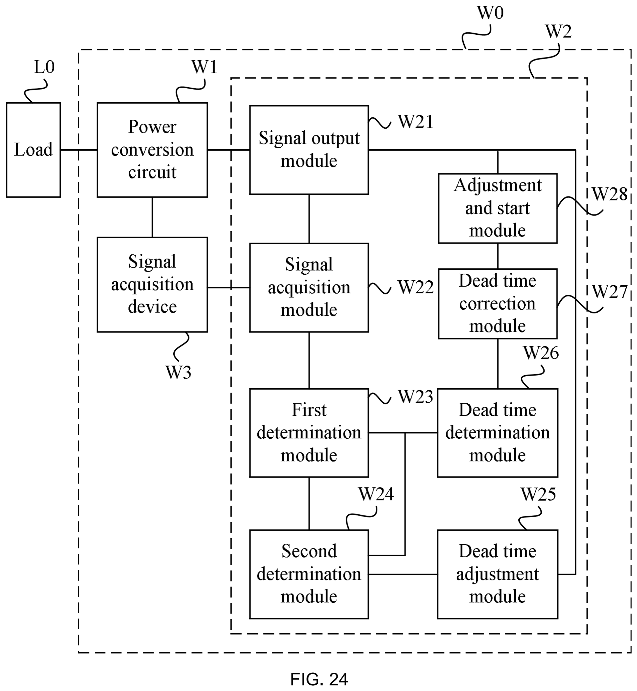

FIG. 24 is a schematic diagram of a system architecture of another electric energy transmission control module according to an example of the present application. As shown in FIG. 24, it is to be understood that when the controller W2 includes the dead time correction module W27, the usage duration of the power conversion circuit after the dead time correction module W27 corrects the calibrated dead time can be acquired to determine whether to update the calibrated dead time.

Similarly, in other examples of the present application, other cases of updating the second calibrated dead time may also be included. For example, when the power tool is used for the first time or when the power tool is charged for the first time, the calibrated dead time may be updated first after the startup. The calibrated dead time may also be updated when the power tool is used for the first time after the power tool is returned to the factory for repair. Alternatively, an initialization control button may be provided on the power tool. The calibrated dead time is updated when the controller W2 receives an initialization signal sent by the initialization control button.

When both the charger and the power supply device each include the electrical energy transmission control module, the type of the voltage converter in the charger may be the same as or different from the type of the voltage converter in the power supply device, which may be set according to design requirements and is not specifically limited in the example of the present application.

In some examples, the power supply device is also used for supplying power to other electrical devices. The electrical devices include, but are not limited to, an illumination device and the like.

For example, the power supply device may also be configured to be detachably disposed in the power tool so that the power supply device can be removed to supply power to other electrical devices. For example, the electrical devices may be illumination devices or other power tools.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

**Claims**

1. A power tool, comprising:

an electric motor comprising a stator and a rotor;
an output member driven by the electric motor to implement a function of the power tool;
a power supply device for supplying power to at least the electric motor;
a driver circuit electrically connected to the electric motor; and
a controller electrically connected to at least the driver circuit to control operation of the electric motor;
wherein the controller is configured to control the electric motor to operate to drive the output member to operate and to acquire electric motor parameters of the electric motor in real time; and
further configured to estimate flux of the electric motor based on the acquired electric motor parameters, estimate a parameter related to real-time temperature of the electric motor according to the flux, and control operation of the power tool according to the acquired parameter.

2. The power tool of claim 1, wherein the controller is configured to control the operation of the electric motor in a field-oriented control (FOC) mode and estimate the flux of the electric motor based on the acquired electric motor parameters and a preset voltage equation.

3. The power tool of claim 2, wherein the controller is configured to acquire initial temperature and an initial flux value corresponding to the initial temperature, calculate a temperature rise value of the rotor according to the flux and the initial flux value, and calculate real-time rotor temperature of the rotor according to the initial temperature and the temperature rise value.

4. The power tool of claim 1, wherein the controller is configured to acquire operating conditions of the electric motor and estimate the parameter related to the real-time temperature of the electric motor according to a target estimation program matching the operating conditions.

5. The power tool of claim 4, wherein the controller is configured to estimate the flux of the electric motor based on the target estimation program and the electric motor parameters.

6. The power tool of claim 4, comprising a string trimmer, wherein the output member is a string trimmer rope, operating conditions of the string trimmer rope comprise at least low-speed winding and high-speed grass trimming, and the operating conditions of the electric motor are in one-to-one correspondence with the operating conditions of the string trimmer rope.

7. The power tool of claim 1, wherein the controller is configured to control the electric motor to stop or decelerate when estimated temperature of the electric motor exceeds a preset value.

8. The power tool of claim 1, further comprising an indication unit for indicating current temperature of the electric motor.

9. The power tool of claim 8, wherein the indicator unit is configured to issue a warning signal according to the current temperature.

10. The power tool of claim 1, comprising at least one of a handheld power tool, a table power tool, a manned mower, a smart mower, an all-terrain vehicle, and an electric motorcycle.

11. The power tool of claim 1, wherein the output member comprises at least one of a string trimmer head, a saw blade, a saw chain, a mowing element, and traveling wheels.

12. The power tool of claim 1, further comprising a housing, wherein the power supply device comprises a battery pack detachably mounted to the housing.

13. The power tool of claim 1, wherein the electric motor parameters comprise a voltage and/or a current on a winding of the electric motor.

14. The power tool of claim 1, further comprising a current detection module for collecting a current of the electric motor, wherein the current comprises a bus current or a phase current of the electric motor.

15. The power tool of claim 1, wherein the electric motor is a brushless motor and the power tool is not provided with a temperature sensor.

16. A control method for a power tool, wherein the power tool is provided with an electric motor; and the control method comprises:

    controlling the electric motor to operate to drive an output member to operate and acquiring electric motor parameters of the electric motor in real time;
    estimating flux of the electric motor according to the electric motor parameters; and
    estimating a parameter related to real-time temperature of the electric motor according to the flux.

17. The control method for a power tool of claim 16, wherein the electric motor is controlled in a field-oriented control (FOC) mode.

18. A power tool, comprising:

    an electric motor comprising a stator and a rotor;
    an output member driven by the electric motor to implement a function of the power tool;
    a power supply device for supplying power to at least the electric motor;
    a driver circuit electrically connected to the electric motor; and
    a controller electrically connected to at least the driver circuit to control operation of the electric motor;
    wherein the controller is configured to acquire operating conditions of the electric motor and estimate a parameter related to real-time temperature of the electric motor according to a target estimation program matching the operating conditions.

19. The power tool of claim 18, wherein the controller is configured to estimate flux of the electric motor based on the target estimation program and electric motor parameters.

20. The power tool of claim 18, comprising a string trimmer, wherein the output member is a string trimmer rope, operating conditions of the string trimmer rope comprise at least low-speed winding and high-speed grass trimming, and the operating conditions of the electric motor are in one-to-one correspondence with the operating conditions of the string trimmer rope.

100

14

15

13

17

16

11

121

12

122

FIG. 1

FIG. 2

FIG. 3

Control the operation of the electric motor in an FOC mode — S1

Acquire electric motor parameters in a stable operation state of the electric motor — S2

Substitute the acquired electric motor parameters into a preset voltage equation to estimate the flux of the electric motor — S3

Estimate the parameter related to the real-time temperature of the electric motor according to the flux — S4

FIG. 4

| Control the operation of the electric motor in an FOC mode | S10 |

↓

| Acquire a voltage model and corresponding electric motor parameters in a stable operation state of the electric motor | S20 |

↓

| Acquire the operating conditions of the electric motor | S30 |

↓

| Adopt a target estimation program that matches the operating conditions, where the target estimation program includes a target equation | S40 |

↓

| Estimate the flux of the electric motor based on the target equation and the electric motor parameters | S50 |

↓

| Estimate the parameter related to the real-time temperature of the electric motor according to the flux | S60 |

↓

| Adjust and control the outputted control signal according to the parameter related to the real-time temperature of the electric motor to control the operation of the power tool | S70 |

FIG. 5

FIG. 6

| Control the electric motor to operate to drive the working attachment to operate and acquire the electric motor parameters of the electric motor in real time | S100 |

| Estimate the flux of the electric motor according to the electric motor parameters | S200 |

| Estimate the parameter related to the real-time temperature of the electric motor according to the flux | S300 |

FIG. 7

100a

12a

12a

12a

FIG. 8

100

110

120

FIG. 9

FIG. 10

FIG. 11

FIG. 12

FIG. 13

FIG. 14

FIG. 15

10

Power supply device — E0

M0

21

Motor — Driver circuit — Signal output module — 231

23

238

Dead time start module

Signal acquisition device — Signal acquisition module — 232

22

First determination module — 233

Dead time determination module — 236

234

Second determination module

Dead time adjustment module — 235

FIG. 16

FIG. 17

In the process of outputting the control signal to the driver circuit, continuously acquire the electrical signal in the power supply loop and the current first dead time of one of the electronic switch groups ⟩S110

S120

No

Determine whether the electrical signal satisfies a preset condition

Yes

S130

No

Determine whether the current dead time of the detected electronic switch group is greater than the preset dead time

Yes

Control the first dead time of the electronic switch group to decrease by a preset step size ⟩S140

Determine the current first dead time as the calibrated dead time of each electronic switch group ⟩S150

FIG. 18

W2

Controller

W0

Signal
acquisition
device

W3

W1

VCC

Power
conversion
circuit

L0

Load

FIG. 19

W11

T1

W13

T1

W12

W1

L0

+

Q1

Q1

Q1

Q1

VCC

Q2

Q2

Q2

Q2

Load

-

FIG. 20

FIG. 21

FIG. 22

FIG. 23

FIG. 24

## INTERNATIONAL SEARCH REPORT

| International application No. |
| --- |
| **PCT/CN2024/087991** |

### A. CLASSIFICATION OF SUBJECT MATTER

H02P21/14(2016.01)i

According to International Patent Classification (IPC) or to both national classification and IPC

### B. FIELDS SEARCHED

Minimum documentation searched (classification system followed by classification symbols)

IPC: H02P

Documentation searched other than minimum documentation to the extent that such documents are included in the fields searched

Electronic data base consulted during the international search (name of data base and, where practicable, search terms used)

CNTXT: CNABS; ENTXT; ENTXTC; CJFD: 电机, 电动工具, 定子, 转子, 输出, 温度, 磁链, 参数, 估算, motor, rotor, stator, temperature, estimating, flux linkage

### C. DOCUMENTS CONSIDERED TO BE RELEVANT

| Category* | Citation of document, with indication, where appropriate, of the relevant passages | Relevant to claim No. |
| --- | --- | --- |
| Y | CN 110417330 A (NANJING CHERVON INDUSTRY CO., LTD.) 05 November 2019 (2019-11-05)<br>description, paragraphs 39-88, and figures 1-5 | 1-20 |
| Y | CN 115955157 A (JING-JIN ELECTRIC TECHNOLOGIES CO., LTD.) 11 April 2023 (2023-04-11)<br>description, paragraphs 29-156, and figures 1-3 | 1-20 |
| A | CN 110912482 A (SHENZHEN SUNYE ELECTRIC CO., LTD.) 24 March 2020 (2020-03-24)<br>entire document | 1-20 |
| A | CN 115189595 A (NANJING QUANFENG TECHNOLOGY CO., LTD.) 14 October 2022 (2022-10-14)<br>entire document | 1-20 |
| A | EP 4052794 A1 (TECHTRONIC CORDLESS GP) 07 September 2022 (2022-09-07)<br>entire document | 1-20 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **19 June 2024** | **24 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/087991**

| Patent document cited in search report | | | Publication date (day/month/year) | Patent family member(s) | | | Publication date (day/month/year) |
|---|---|---|---|---|---|---|---|
| CN | 110417330 | A | 05 November 2019 | EP | 3562030 | A1 | 30 October 2019 |
| | | | | US | 2019334459 | A1 | 31 October 2019 |
| | | | | CN | 110405250 | A | 05 November 2019 |
| | | | | CN | 110405702 | A | 05 November 2019 |
| | | | | CN | 110417324 | A | 05 November 2019 |
| | | | | CN | 110417325 | A | 05 November 2019 |
| | | | | CN | 110417331 | A | 05 November 2019 |
| | | | | CN | 110417325 | B | 19 November 2021 |
| | | | | CN | 110417330 | B | 19 November 2021 |
| | | | | CN | 110417331 | B | 19 November 2021 |
| | | | | CN | 110405250 | B | 04 January 2022 |
| | | | | CN | 110417324 | B | 04 January 2022 |
| | | | | US | 10770993 | B2 | 08 September 2020 |
| CN | 115955157 | A | 11 April 2023 | None | | | |
| CN | 110912482 | A | 24 March 2020 | None | | | |
| CN | 115189595 | A | 14 October 2022 | WO | 2022142840 | A1 | 07 July 2022 |
| | | | | CN | 114765431 | A | 19 July 2022 |
| | | | | EP | 4236060 | A1 | 30 August 2023 |
| | | | | US | 2023283220 | A1 | 07 September 2023 |
| | | | | CN | 114765431 | B | 15 March 2024 |
| | | | | EP | 4236060 | A4 | 15 May 2024 |
| EP | 4052794 | A1 | 07 September 2022 | MX | 2022001448 | A | 05 September 2022 |
| | | | | CA | 3150712 | A1 | 03 September 2022 |
| | | | | AU | 2022200942 | A1 | 22 September 2022 |
| | | | | CN | 115008422 | A | 06 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310483873

- CN 202310484955